# EUROPEAN PATENT APPLICATION

(11) **EP 3 879 788 A1**
(43) Date of publication of application: **15.09.2021**
(21) Application number: 19890555.6
(22) Date of filing: 10.09.2019
(51) Int. Cl.: H04L 29/08

(54) **TRANSMISSION POLICY DETERMINATION METHOD, POLICY CONTROL METHOD, AND DEVICE**

(30) Priority: 27.11.2018 CN 201811428702
(71) Applicant: Huawei Technologies Co., Ltd., Longgang District Shenzhen, Guangdong 518129 (CN)
(72) Inventor: XIN, Yang, Shenzhen, Guangdong 518129 (CN); WU, Xiaobo, Shenzhen, Guangdong 518129 (CN); CHONG, Weiwei, Shenzhen, Guangdong 518129 (CN)
(74) Representative: Körber, Martin Hans
(86) International application number: PCT/CN2019/105207
(87) International publication number: WO 2020/108002

(57) **Abstract**

Embodiments of this application relate to the field of communication technologies, and provide a transfer policy determining method, a policy control method, and an apparatus, to resolve a conventional-technology problem that a PCF network element does not have enough information to determine an accurate BDT policy. The solution includes: A policy control network element receives first information of a network in a first network area from a slice management and control network element, where the first information includes at least one of load information of the network in a first time interval and load information of at least one network slice in the first time interval, and the network includes the at least one network slice. The policy control network element determines, based on the first information, a service data transfer policy of a terminal located in the first network area.

## Description

This application claims priority to Chinese Patent Application No. 201811428702.4, filed with the China National Intellectual Property Administration on November 27, 2018 and entitled "TRANSFER POLICY DETERMINING METHOD, POLICY CONTROL METHOD, AND APPARATUS", which is incorporated herein by reference in its entirety.

### TECHNICAL FIELD

Embodiments of this application relate to the field of communication technologies, and in particular, to a transfer policy determining method, a policy control method, and an apparatus.

### BACKGROUND

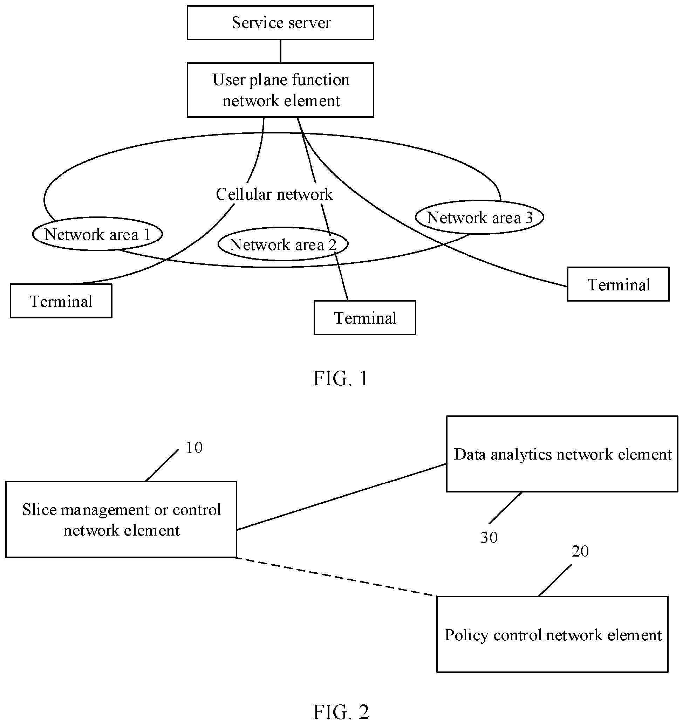

In the big data era, a large volume of data is generated on a terminal side. Usually, such data needs to be uploaded to a cloud server sometimes. Although such data does not require timeliness, the data is sensitive to pricing. Traffic generated during transfer of such data is usually referred to as background data (Background Data). As shown in FIG. 1, for an automobile enterprise, map information may be uploaded to a cloud server by using an operator network, to develop a high-definition map.

Currently, in a conventional technology, a policy control function (Policy Control Function, PCF) network element may develop a service data transfer policy based on requirement information received from an application function (Application Function, AF) network element. If the PCF network element does not have the service data transfer policy requested by the AF, the PCF network element obtains, from a unified data repository (Unified data repository, UDR) network element, all service data transfer policies corresponding to the AF network element and network area information corresponding to each service data transfer policy. In this way, the PCF network element may select, based on all the service data transfer policies from the UDR, the requirement information, and an operator policy, at least one service data transfer policy for transferring service data.

However, in the conventional technology, the PCF network element does not have enough information to determine an accurate service data transfer policy.

### SUMMARY

Embodiments of this application provide a transfer policy determining method, a policy control method, and an apparatus, to resolve a conventional-technology problem that a PCF network element does not have enough information to determine an accurate service data transfer policy.

To resolve the foregoing technical problem, the embodiments of this application provide the following technical solutions:
According to a first aspect, an embodiment of this application provides a transfer policy determining method, including: A policy control network element receives first information of a network in a first network area from a slice management and control network element, where the first information includes load information of the network in a first time interval and load information of at least one network slice in the first time interval. Alternatively, the first information includes the load information of the network in the first time interval. Alternatively, the first information includes the load information of the at least one network slice in the first time interval. The network includes the at least one network slice. The policy control network element determines, based on the first information, a service data transfer policy of a terminal located in the first network area.

For example, the load information of the network may be a load level of the network, a congestion level of the network, or performance of the network. The load information of the network slice may be at least one of the following: a load level of the network slice, a congestion level of the network slice, a relationship between quality of the network slice and a quality requirement, or performance of the network slice.

It should be understood that the load information of the network may alternatively be indication information used to indicate the load level of the network, the congestion level of the network, or the performance of the network.

It should be understood that the load information of the network slice may alternatively be indication information used to indicate at least one of the following information: the load level of the network slice, the congestion level of the network slice, the relationship between the quality of the network slice and the quality requirement, or the performance of the network slice.

In the transfer policy determining method provided in this embodiment of this application, the policy control network element obtains, from the slice management and control network element, the load information of the network in the first network area in the first time interval and/or the load information of the at least one network slice in the first time interval. Because the load information of the network in the first time interval usually reflects whether the network is in an idle state, the load information of the at least one network slice in the first time interval may be used to determine the load information of the network. Therefore, a status of the network in the first time interval can be obtained. If the network is in an idle state, it means that the network has an idle resource at this moment. To be specific, the network still has an idle resource while satisfying running quality of the at least one network slice. Therefore, the policy control network element may determine the service data transfer policy of the terminal based on the status of the network in the first time interval. In this way, service data transfer of the terminal can be prevented from affecting running quality of another network slice in the network. In addition, idle resources of the network can be fully used.

In a possible implementation, the service data transfer policy includes a second time interval, and the second time interval is a time interval that is in the first time interval and in which the load information of the network satisfies a preset network load requirement. In the second time interval, if the network is in an idle state, the terminal transfers the service data in the second time interval. An idle resource of the network may be used to transfer the service data of the terminal to a maximum extent, and the running quality of the at least one network slice in the network is not affected.

In a possible implementation, when the first information includes the load information of the at least one network slice in the first time interval, the method provided in this embodiment of this application further includes: The policy control network element determines the load information of the network in the first time interval based on the load information of the at least one network slice in the first time interval. Because the network includes the at least one network slice, when the at least one network slice provides a service, the at least one network slice affects each other in terms of running quality. Consequently, a running status of the network is affected.

In a possible implementation, the method provided in this embodiment of this application further includes: The policy control network element sends, to the slice management and control network element, a first request used to request the first information, where the first request includes second information, the second information includes an identifier of a second network area, and the second network area includes the first network area. The second network area is provided for the slice management and control network element, so that the slice management and control network element determines a range for obtaining the first information.

In a possible implementation, the second information further includes at least one of the following information: a third time interval, a quantity of first users that is corresponding to the terminal, a first data volume corresponding to the terminal, an identifier of the terminal, and an identifier of an application function network element corresponding to a service providing server serving the terminal, where the third time interval is used to indicate a service data transfer time that is of the terminal and that is desired by the service providing server, and the first quantity of users is used to indicate a quantity of terminals for which the service providing server expects to transfer service data. A requirement of the service providing server is provided for the slice management and control network element, so that the slice management and control network element determines a range for obtaining the first information.

In a possible implementation, the terminal is served by a first network slice.

In a possible implementation, the at least one network slice includes the first network slice.

In a possible implementation, the first network slice is used to transfer background data.

In a possible implementation, the service data is the background data.

In a possible implementation, the method provided in this embodiment of this application further includes: The policy control network element sends the service data transfer policy of the terminal to the application function network element.

According to a second aspect, an embodiment of this application provides a policy control method, including: A slice management and control network element determines first information of a network in a first network area, where the first information includes at least one of load information of the network in a first time interval and load information of at least one network slice in the first time interval, and the network includes the at least one network slice. The slice management and control network element sends the first information to a policy control network element.

In a possible implementation, the method provided in this embodiment of this application further includes: The slice management and control network element receives, from the policy control network element, a first request used to request first information of a network in a second network area, where the first request includes second information carrying an identifier of the second network area, and the second network area includes the first network area.

In a possible implementation, the second information may further include at least one of the following information: a third time interval, a first quantity of users that is corresponding to a terminal, a first data volume corresponding to the terminal, an identifier of the terminal, and an identifier of an application function network element corresponding to a service providing server serving the terminal. The third time interval is used to indicate a service data transfer time that is of the terminal and that is desired by the service providing server, and the first quantity of users is used to indicate a quantity of terminals for which the service providing server expects to transfer service data.

In a possible implementation, the method provided in this embodiment of this application further includes: The slice management and control network element obtains third information from a data analytics network element, where the third information includes at least one of the following information corresponding to the at least one network slice: identifier information, time information, area information, a second quantity of users, a second data volume, and service information. The service information is used to determine a status of a service in the network slice.

In a possible implementation, the service information includes a service identifier corresponding to the service, and at least one of the following information: a quantity of users, first average service experience, first service experience range information, and first service satisfaction.

In a possible implementation, the method provided in this embodiment of this application further includes: The slice management and control network element sends, to the data analytics network element, a second request used to request the third information, where the second request includes the identifier of the second network area and at least one of the following information of the at least one network slice: the identifier information and the time information.

In a possible implementation, the method provided in this embodiment of this application further includes: The slice management and control network element obtains fourth information, where the fourth information includes at least one of the following information corresponding to the at least one network slice: a third quantity of users and a terminal identifier list.

In a possible implementation, that the slice management and control network element obtains fourth information includes: The slice management and control network element sends, to the data analytics network element or at least one access and mobility management function network element that serves the first network area, a third request used to request the fourth information, where the third request includes at least one of the following information of the at least one network slice: the identifier information, the time information, and the area information. The slice management and control network element receives the fourth information from the data analytics network element or the at least one access and mobility management function network element.

In a possible implementation, that a slice management and control network element determines first information of a network in a first network area includes: The slice management and control network element determines the first information based on at least one of the following information: the second information, the third information, and the fourth information.

In a possible implementation, the method provided in this embodiment of this application further includes: The slice management and control network element controls user access to the first network slice based on at least one of the first information, the second information, the third information, and the fourth information.

In a possible implementation, the terminal is served by a first network slice.

In a possible implementation, the at least one network slice includes the first network slice.

In a possible implementation, the first network slice is used to transfer background data.

According to a third aspect, an embodiment of this application provides a transfer policy determining apparatus. The transfer policy determining apparatus can implement the transfer policy determining method according to any one of the first aspect or the possible implementations of the first aspect, and therefore can further implement beneficial effects according to any one of the first aspect or the possible implementations of the first aspect. The transfer policy determining apparatus may be a policy control network element, or may be an apparatus that can support a policy control network element in implementing any one of the first aspect or the possible implementations the first aspect, for example, a chip used in the policy control network element. The transfer policy determining apparatus may implement the foregoing methods by using software, hardware, or hardware executing corresponding software.

In an example, the transfer policy determining apparatus includes a receiving unit, configured to receive first information of a network in a first network area from a slice management and control network element, where the first information includes load information of the network in a first time interval and load information of at least one network slice in the first time interval. Alternatively, the first information includes the load information of the network in the first time interval. Alternatively, the first information includes the load information of the at least one network slice in the first time interval. The network includes the at least one network slice. The transfer policy determining apparatus includes a processing unit, configured to determine, based on the first information, a service data transfer policy of a terminal located in the first network area.

In a possible implementation, the service data transfer policy includes a second time interval, and the second time interval is a time interval that is in the first time interval and in which the load information of the network satisfies a preset network load requirement.

In a possible implementation, when the first information includes the load information of the at least one network slice in the first time interval, the processing unit is specifically configured to determine the load information of the network in the first time interval based on the load information of the at least one network slice in the first time interval.

In a possible implementation, the apparatus provided in this embodiment of this application further includes a sending unit, configured to send, to the slice management and control network element, a first request used to request the first information, where the first request includes second information, the second information includes an identifier of a second network area, and the second network area includes the first network area.

In a possible implementation, the second information further includes at least one of the following information: a third time interval, a quantity of first users that is corresponding to the terminal, a first data volume corresponding to the terminal, an identifier of the terminal, and an identifier of an application function network element corresponding to a service providing server serving the terminal, where the third time interval is used to indicate a service data transfer time that is of the terminal and that is desired by the service providing server, and the first quantity of users is used to indicate a quantity of terminals for which the service providing server expects to transfer service data.

In a possible implementation, the terminal is served by a first network slice.

In a possible implementation, the at least one network slice includes the first network slice.

In a possible implementation, the first network slice is used to transfer background data.

In a possible implementation, the service data is the background data.

In another example, an embodiment of this application further provides a transfer policy determining apparatus. The transfer policy determining apparatus may be a policy control network element or a chip used in a policy control network element. The transfer policy determining apparatus includes a communication interface and one or more processors.

The transfer policy determining apparatus communicates with another device through the communication interface. When the one or more processors execute instructions, the transfer policy determining apparatus performs the transfer policy determining method according to any one of the first aspect or the possible implementations of the first aspect.

For example, the communication interface is configured to support the transfer policy determining apparatus in performing message/data sending and receiving steps performed on a side of the transfer policy determining apparatus according to any one of the first aspect or the possible implementations of the first aspect. The processor is configured to support the transfer policy determining apparatus in performing a message/data processing step performed on a side of the transfer policy determining apparatus according to any one of the first aspect or the possible implementations of the first aspect. For a specific corresponding step, refer to descriptions in any one of the first aspect or the possible implementations of the first aspect. Details are not described herein again.

Optionally, the communication interface and the processor of the transfer policy determining apparatus are coupled to each other.

Optionally, the transfer policy determining apparatus may further include a memory, configured to store computer program code, and the computer program code includes instructions. Optionally, the processor, the communication interface, and the memory are coupled to each other.

According to a fourth aspect, an embodiment of this application provides a policy control apparatus. The policy control apparatus can implement the policy control method according to any one of the second aspect or the possible implementations of the second aspect, and therefore can further implement beneficial effects according to any one of the second aspect or the possible implementations of the second aspect. The policy control apparatus may be a slice management and control network element, or may be an apparatus that can support a slice management and control network element in implementing any one of the second aspect or the possible implementations the second aspect, for example, a chip used in the slice management and control network element. The policy control apparatus may implement the foregoing methods by using software, hardware, or hardware executing corresponding software.

In an example, the policy control apparatus includes: a processing unit, configured to determine first information of a network in a first network area, where the first information includes at least one of load information of the network in a first time interval and load information of at least one network slice in the first time interval, and the network includes the at least one network slice; and a sending unit, configured to send the first information to a policy control network element.

In a possible implementation, the apparatus provided in this embodiment of this application further includes: a receiving unit, configured to receive, from the policy control network element, a first request used to request first information of a network in a second network area, where the first request includes second information carrying an identifier of the second network area, and the second network area includes the first network area. It should be understood that, in this case, the processing unit is specifically configured to determine the first information of the network in the first network area based on the first request.

In a possible implementation, the second information may further include at least one of the following information: a third time interval, a first quantity of users that is corresponding to a terminal, a first data volume corresponding to the terminal, an identifier of the terminal, and an identifier of an application function network element corresponding to a service providing server serving the terminal. The third time interval is used to indicate a service data transfer time that is of the terminal and that is desired by the service providing server, and the first quantity of users is used to indicate a quantity of terminals for which the service providing server expects to transfer service data.

In a possible implementation, the receiving unit is configured to obtain third information from a data analytics network element, where the third information includes at least one of the following information corresponding to the at least one network slice: identifier information, time information, area information, a second quantity of users, a second data volume, and service information. The service information is used to determine a status of a service in the network slice.

In a possible implementation, the service information includes a service identifier corresponding to the service, and at least one of the following information: a quantity of services, first average service experience, first service experience range information, and first service satisfaction.

In a possible implementation, the sending unit is further configured to send, to the data analytics network element, a second request used to request the third information, where the second request includes the identifier of the second network area and at least one of the following information of the at least one network slice: the identifier information and the time information.

In a possible implementation, the receiving unit is further configured to obtain fourth information, where the fourth information includes at least one of the following information corresponding to the at least one network slice: a third quantity of users and a terminal identifier list.

In a possible implementation, the sending unit is further configured to send, to the data analytics network element or at least one access and mobility management function network element that serves the first network area, a third request used to request the fourth information, where the third request includes at least one of the following information of the at least one network slice: the identifier information, the time information, and the area information. The receiving unit is specifically configured to receive the fourth information from the data analytics network element or the at least one access and mobility management function network element.

In a possible implementation, the processing unit is specifically configured to determine the first information based on at least one of the following information: the second information, the third information, and the fourth information.

In a possible implementation, the processing unit is further configured to control user access to the first network slice based on at least one of the first information, the second information, the third information, and the fourth information.

In a possible implementation, the terminal is served by a first network slice.

In a possible implementation, the at least one network slice includes the first network slice.

In a possible implementation, the first network slice is used to transfer background data.

In another example, an embodiment of this application further provides a policy control apparatus. The policy control apparatus may be a slice management and control network element or a chip used in a slice management and control network element. The policy control apparatus includes a communication interface and one or more processors.

The policy control apparatus communicates with another device through the communication interface. When the one or more processors execute instructions, the policy control apparatus performs the policy control method according to any one of the second aspect or the possible implementations of the second aspect.

For example, the communication interface is configured to support the policy control apparatus in performing message/data sending and receiving steps performed on a side of the policy control apparatus according to any one of the second aspect or the possible implementations of the second aspect. The processor is configured to support the policy control apparatus in performing a message/data processing step performed on a side of the policy control apparatus according to any one of the second aspect or the possible implementations of the second aspect. For a specific corresponding step, refer to descriptions in any one of the second aspect or the possible implementations of the second aspect. Details are not described herein again.

Optionally, the communication interface and the processor of the policy control apparatus are coupled to each other.

Optionally, the policy control apparatus may further include a memory, configured to store computer program code, and the computer program code includes instructions. Optionally, the processor, the communication interface, and the memory are coupled to each other.

According to a fifth aspect, an embodiment of this application provides a communication system. The communication system includes the transfer policy determining apparatus according to any one of the third aspect or the various possible implementations of the third aspect, and the policy control apparatus according to any one of the fourth aspect or the various possible implementations of the fourth aspect.

According to a sixth aspect, an embodiment of this application provides a computer-readable storage medium. The computer-readable storage medium stores instructions. When the instructions are run on a computer, the computer is enabled to perform the transfer policy determining method according to any one of the first aspect or the various possible implementations of the first aspect.

According to a seventh aspect, this application provides a computer-readable storage medium. The computer-readable storage medium stores instructions. When the instructions are run on a computer, the computer is enabled to perform the policy control method according to any one of the second aspect or the various possible implementations of the second aspect.

According to an eighth aspect, this application provides a computer program product including instructions. When the instructions are run on a computer, the computer is enabled to perform the transfer policy determining method according to any one of the first aspect or the various possible implementations of the first aspect.

According to a ninth aspect, this application provides a computer program product including instructions. When the instructions are run on a computer, the computer is enabled to perform the policy control method according to any one of the second aspect or the various possible implementations of the second aspect.

According to a tenth aspect, an embodiment of this application provides a chip. The chip includes a processor and a communication interface. The communication interface is coupled to the processor. The processor is configured to run a computer program or instructions, to implement the transfer policy determining method according to any one of the first aspect or the various possible implementations of the first aspect. The communication interface is configured to communicate with another module other than the chip.

According to an eleventh aspect, an embodiment of this application provides a chip. The chip includes a processor and a communication interface. The communication interface is coupled to the processor. The processor is configured to run a computer program or instructions, to implement the policy control method according to any one of the second aspect or the various possible implementations of the second aspect. The communication interface is configured to communicate with another module other than the chip.

For beneficial effects of the second aspect to the eleventh aspect and the implementations thereof in this application, refer to the analysis of the beneficial effects in the first aspect and the implementations of the first aspect. Details are not described herein again.

According to a twelfth aspect, an embodiment of this application provides a user access control method, including: A slice management and control network element receives first information of a first network slice in a first network area from a first network element, where the first information includes at least one of a first quantity of users, a second quantity of users, and a third quantity of users. The first quantity of users is used to indicate a desired or required quantity of users of the first network slice in the first network area, the second quantity of users is used to indicate a quantity of users who have accessed the first network slice in the first network area, and the third quantity of users is used to indicate a quantity of users who are allowed to access the first network slice in the first network area. The slice management and control network element controls user access to the first network slice based on the first information.

It should be understood that the slice management and control network element may be any one of a network slice selection function network element, an access and mobility management function network element, and a policy control network element.

It should be understood that the slice management and control network element may receive first information of a first network slice in each of a plurality of network areas from the first network element. That is, the first network area may include a plurality of network areas. A general description is provided herein, and details are not described again below.

It should be understood that the first quantity of users is a quantity of users of the first network slice in the first network area, where the quantity is desired or required by a service server or service provider corresponding to the first network slice.

In a possible implementation, the first information of the first network slice in the first network area may further include at least one of the following information: identifier information of the first network slice, an identifier of the first network area, first time information, and information about at least one service, where information about a service includes at least one of the following information: a service identifier, a first quantity of services, first average service experience, and first user satisfaction. It should be understood that the first time information is time information corresponding to the first network slice in the first network area. It should be understood that, the first quantity of services is used to indicate a quantity of users using the service in the first network slice in the first network area, and the first user satisfaction is a ratio of a quantity of users satisfying a service experience requirement to the quantity of users using the service in the first network slice in the first network area. It should be understood that the third quantity of users is the quantity that is of users allowed to access the first network slice in the first network area and that is determined by the first network element or obtained from another network element. Further, it may be understood that the third quantity of users is a quantity of users who are initially allowed to access the first network slice in the first network area before a drive test, during initial creation, or before signing of an SLA (corresponding to the first time information).

It should be noted that the time information in this embodiment of this application may be specifically corresponding to any one of a time interval, a time window, or a timestamp.

In a possible implementation, the first network element is a policy control network element, a data analytics network element, a network management network element, or an access and mobility management function network element.

In a possible implementation, the method provided in this embodiment of this application further includes: The slice management and control network element receives third information of at least one network slice in the first network area from the data analytics network element or the network management network element, where third information of any one of the at least one network slice includes at least one of the following information: identifier information of the network slice, third time information, an identifier of a third network area, a fifth quantity of users, and information about at least one service. The fifth quantity of users is used to indicate a quantity of users accessing any network slice, and information about a service is used to determine a status of the service.

It should be understood that the third time information may be the first time information, may be sub-time information in the first time information, or may be other time information.

It should be understood that the third network area may be equal to the first network area.

It should be understood that the third network area may alternatively be a sub-area corresponding to the first network area. In this case, the slice management and control network element may receive third information of at least one network slice in each of at least one third network area from the data analytics network element.

In a possible implementation, the information about the service includes at least one of the following information corresponding to the service: a service identifier, a third quantity of services, third average service experience, third service experience range information, and third service satisfaction, where the third quantity of services is used to indicate a quantity of users using the service in a network slice to which the service belongs.

In a possible implementation, the slice management and control network element controls user access to the first network slice based on the first information and the third information of the at least one network slice.

In a possible implementation, the at least one network slice includes the first network slice.

In a possible implementation, the first network slice is a network slice that can transfer background data.

In a possible implementation, the slice management and control network element sends fourth information of the first network slice in the first network area to the first network element, where the fourth information includes a sixth quantity of users, and the sixth quantity of users is used to indicate a quantity of users allowed to access the first network slice in the first network area. It should be understood that the sixth quantity of users is a quantity that is of users allowed to access the first network slice in the first network area and that is determined by the slice management and control network element. Further, it may be understood that the sixth quantity of users is a quantity of users who are initially allowed to access the first network slice in the first network area after the drive test, after the creation, or after signing of the SLA.

According to a thirteenth aspect, an embodiment of this application provides an information determining method, including: A first network element determines first information of a first network slice in a first network area, where the first information includes at least one of a first quantity of users, a second quantity of users, and a third quantity of users. The first quantity of users is used to indicate a desired or required quantity of users of the first network slice in the first network area, the second quantity of users is used to indicate a quantity of users who have accessed the first network slice in the first network area, and the third quantity of users is used to indicate a quantity of users who are allowed to access the first network slice in the first network area. The first network element sends the first information of the first network slice in the first network area to a slice management and control network element.

It should be understood that the first network element may determine first information of a first network slice in each of a plurality of first network areas.

It should be understood that the first quantity of users is a quantity of users that is desired or required by a service server or service provider corresponding to the first network slice.

In a possible implementation, the first information of the first network slice in the first network area may further include at least one of the following information: an identifier of the first network area, first time information, and information about at least one service, where information about a service includes at least one of the following information: a service identifier, a first quantity of services, first average service experience, and first user satisfaction. It should be understood that the first time information is time information corresponding to the first network slice in the first network area, and the time information may be any one of a time interval, a time window, or a timestamp.

It should be understood that, the first quantity of services is used to indicate a quantity of users using the service in the first network slice in the first network area, and the first user satisfaction is a ratio of a quantity of users satisfying a service experience requirement to the quantity of users using the service in the first network slice in the first network area.

In a possible implementation, the first network element is a policy control network element, a data analytics network element, or a network management network element.

In a possible implementation, when the first network element is a policy control network element, that a first network element determines first information of a first network slice in a first network area includes: The policy control network element receives the first information from a data analytics network element or a network management network element.

In a possible implementation, that the policy control network element receives the first information from a data analytics network element or a network management network element includes: The policy control network element sends, to the data analytics network element or the network management network element, a first request used to request the first information. The first request includes second information, and the second information includes at least one of the following information: identifier information of the first network slice, a second network area, second time information, a terminal group identifier, a terminal identifier of at least one terminal, a fourth quantity of users, an identifier of an application function network element, and at least one piece of information about a service requirement. The first network slice serves the second network area, the second network area includes the first network area, and the second network area is a network area in which at least one terminal corresponding to the application function network element is located. The terminal group identifier is an identifier of a group in which the at least one terminal is located, and the third quantity of users is a quantity of terminals in the at least one terminal. The policy control network element receives a first response from the data analytics network element or the network management network element, where the first response includes the first information.

It should be understood that the second time information may be the first time information, may include the first time information, or may not include the first time information.

It should be understood that the second network area may be the first network area. The first network area may alternatively be a sub-area corresponding to the second network area. In this case, the policy control network element may receive first information of at least one network slice in each of at least one first network area from the data analytics network element or the network management network element.

In a possible implementation, information about a service requirement includes at least one of the following information: a service identifier, a second quantity of services, second average service experience, second service experience range information, and second service satisfaction. It should be understood that the second quantity of services is a quantity of users using the service, where the quantity is desired or required by the service server or service provider corresponding to the first network slice, the second service experience is service experience that is of the service and that is desired or required by the service server or service provider corresponding to the first network slice, the second service experience range information is a service experience range that is of the service and that is desired or required by the service server or service provider corresponding to the first network slice, and the second service satisfaction is service satisfaction that is of the service and that is desired or required by the service server or service provider corresponding to the first network slice.

In a possible implementation, the policy control network element obtains the second information from the application function network element or the network management network element.

Optionally, a tenant or service provider of the first network slice may configure the second information on the policy control network element via an operator. In this way, the policy control network element may locally obtain the second information.

In a possible implementation, when the second information does not include the terminal identifier of the at least one terminal, the policy control network element may obtain the terminal identifier of the at least one terminal by querying a database network element based on the terminal group identifier or the identifier of the application function network element in the second information.

In a possible implementation, the database network element may be a unified data management network element or a unified data repository network element.

In a possible implementation, when the first network element is a data analytics network element, that the data analytics network element determines the first information includes: The data analytics network element obtains second information from a policy control function network element, an application function network element, or a network management network element. The data analytics network element determines the first information based on the second information.

In a possible implementation, the method provided in this embodiment of this application further includes: When the first network element is a data analytics network element, the first network element sends third information of at least one network slice in the first network area to the slice management and control network element, where the third information of the at least one network slice includes at least one of the following information: identifier information, third time information, area information, a fifth quantity of users, and information about at least one service, the fourth quantity of users is used to indicate a quantity of users accessing the at least one network slice, and information about a service is used to determine a status of the service.

In a possible implementation, the information about the service includes at least one of the following information corresponding to the service: a service identifier, a third quantity of services, third average service experience, third service experience range information, and third service satisfaction, where the third quantity of services is used to indicate a quantity of users using the service in the at least one network slice.

In a possible implementation, the at least one network slice includes the first network slice.

In a possible implementation, the first network slice is a network slice for transferring background data.

In a possible implementation, the method provided in this embodiment of this application further includes: The first network element receives fourth information of the first network slice in the first network area from the slice management and control network element, where the fourth information includes a sixth quantity of users, and the sixth quantity of users is used to indicate a quantity of users allowed to access the first network slice in the first network area. It should be understood that the sixth quantity of users is a quantity that is of users allowed to access the first network slice in the first network area and that is determined by the slice management and control network element. Further, it may be understood that the sixth quantity of users is a quantity of users who are initially allowed to access the first network slice in the first network area after a drive test, after creation, or after signing of an SLA.

In a possible implementation, the method provided in this embodiment of this application further includes: The first network element sends the fourth information of the first network slice in the first network area to the application function network element or the network management network element.

According to a fourteenth aspect, an embodiment of this application provides a user access control apparatus. The user access control apparatus can implement the user access control method according to any one of the twelfth aspect or the possible implementations of the twelfth aspect, and therefore can further implement beneficial effects according to any one of the twelfth aspect or the possible implementations of the twelfth aspect. The user access control apparatus may be a slice management and control network element, or may be an apparatus that can support a slice management and control network element in implementing any one of the twelfth aspect or the possible implementations the twelfth aspect, for example, a chip used in the slice management and control network element. The user access control apparatus may implement the foregoing methods by using software, hardware, or hardware executing corresponding software.

For example, an embodiment of this application provides a user access control apparatus, including: a receiving unit, configured to receive first information of a first network slice in a first network area from a first network element, where the first information includes at least one of a first quantity of users, a second quantity of users, and a third quantity of users. The first quantity of users is used to indicate a desired or required quantity of users of the first network slice in the first network area, the second quantity of users is used to indicate a quantity of users who have accessed the first network slice in the first network area, and the third quantity of users is used to indicate a quantity of users who are allowed to access the first network slice in the first network area. The apparatus includes a processing unit, configured to control user access to the first network slice based on the first information.

In a possible implementation, for specific content of the first information of the first network slice in the first network area, refer to related descriptions in the thirteenth aspect. Details are not described herein again.

In a possible implementation, the first network element is a policy control network element, a data analytics network element, or a network management network element.

In a possible implementation, the receiving unit is further configured to receive third information of at least one network slice in the first network area from the data analytics network element or the network management network element, where third information of any one of the at least one network slice includes at least one of the following information: identifier information of the network slice, third time information, an identifier of a third network area, a fifth quantity of users, and information about at least one service. The fifth quantity of users is used to indicate a quantity of users accessing any network slice, and information about a service is used to determine a status of the service.

In a possible implementation, the information about the service includes at least one of the following information corresponding to the service: a service identifier, a third quantity of services, third average service experience, third service experience range information, and third service satisfaction, where the third quantity of services is used to indicate a quantity of users using the service in the network slice.

In a possible implementation, the processing unit is specifically configured to control user access to the first network slice based on the first information and the third information of the at least one network slice.

In a possible implementation, the at least one network slice includes the first network slice.

In a possible implementation, the first network slice is a network slice that can transfer background data.

In a possible implementation, a sending unit is further configured to send fourth information of the first network slice in the first network area to the first network element, where the fourth information includes a sixth quantity of users, and the sixth quantity of users is used to indicate a quantity of users allowed to access the first network slice in the first network area. It should be understood that the sixth quantity of users is a quantity that is of users allowed to access the first network slice in the first network area and that is determined by the slice management and control network element. Further, it may be understood that the sixth quantity of users is a quantity of users who are initially allowed to access the first network slice in the first network area after a drive test, after creation, or after signing of an SLA.

In another example, an embodiment of this application further provides a user access control apparatus. The user access control apparatus may be a slice management and control network element or a chip used in a slice management and control network element. The user access control apparatus includes a communication interface and one or more processors.

The user access control apparatus communicates with another device through the communication interface. When the one or more processors execute instructions, the user access control apparatus performs the user access control method according to any one of the twelfth aspect or the possible implementations of the twelfth aspect.

For example, the communication interface is configured to support the user access control apparatus in performing message/data sending and receiving steps performed on a side of the user access control apparatus according to any one of the twelfth aspect or the possible implementations of the twelfth aspect. The processor is configured to support the user access control apparatus in performing a message/data processing step performed on a side of the user access control apparatus according to any one of the twelfth aspect or the possible implementations of the twelfth aspect. For a specific corresponding step, refer to descriptions in any one of the twelfth aspect or the possible implementations of the twelfth aspect. Details are not described herein again.

Optionally, the communication interface and the processor of the user access control apparatus are coupled to each other.

Optionally, the user access control apparatus may further include a memory, configured to store computer program code, and the computer program code includes instructions. Optionally, the processor, the communication interface, and the memory are coupled to each other.

Specifically, in another example of the fourteenth aspect, the communication interface is configured to perform specific steps performed by the receiving unit and the sending unit in the example of the fourteenth aspect. In another example of the fourteenth aspect, the processor is configured to perform a specific step performed by the processing unit in the example of the fourteenth aspect. For example, the sending unit and the receiving unit are replaced with a communication interface, and the processing unit is replaced with a processor.

It should be understood that for related explanations in the fourteenth aspect, refer to related descriptions in the twelfth aspect. Details are not described herein again.

According to a fifteenth aspect, an embodiment of this application provides an information determining apparatus. The information determining apparatus can implement the information determining method according to any one of the thirteenth aspect or the possible implementations of the thirteenth aspect, and therefore can further implement beneficial effects according to any one of the thirteenth aspect or the possible implementations of the thirteenth aspect. The information determining apparatus may be a first network element, or may be an apparatus that can support a first network element in implementing any one of the thirteenth aspect or the possible implementations the thirteenth aspect, for example, a chip used in the first network element. The information determining apparatus may implement the foregoing methods by using software, hardware, or hardware executing corresponding software.

In an example, an embodiment of this application provides an information determining apparatus, including: a processing unit, configured to determine first information of a first network slice in a first network area, where the first information includes at least one of a first quantity of users, a second quantity of users, and a third quantity of users. The first quantity of users is used to indicate a desired or required quantity of users of the first network slice in the first network area, the second quantity of users is used to indicate a quantity of users who have accessed the first network slice in the first network area, and the third quantity of users is used to indicate a quantity of users who are allowed to access the first network slice in the first network area. A slice management and control network element controls, based on the first information, a quantity of users accessing the first network slice.

It should be understood that the first network element may determine first information of a first network slice in each of a plurality of first network areas.

It should be understood that the first quantity of users is a quantity of users that is desired or required by a service server or service provider corresponding to the first network slice.

In a possible implementation, the first information of the first network slice in the first network area may further include at least one of the following information: an identifier of the first network area, first time information, and information about at least one service, where information about a service includes at least one of the following information: a service identifier, a first quantity of services, first average service experience, and first user satisfaction. It should be understood that the first time information is time information corresponding to the first network slice in the first network area, and the time information may be any one of a time interval, a time window, or a timestamp.

It should be understood that, the first quantity of services is used to indicate a quantity of users using the service in the first network slice in the first network area, and the first user satisfaction is a ratio of a quantity of users satisfying a service experience requirement to the quantity of users using the service in the first network slice in the first network area.

In a possible implementation, the first network element is a policy control network element, a data analytics network element, or a network management network element.

In a possible implementation, when the first network element is a policy control network element, the processing unit is specifically configured to receive the first information from a data analytics network element or a network management network element by using a receiving unit.

In a possible implementation, a sending unit is further configured to send, to the data analytics network element or the network management network element, a first request used to request the first information. The first request includes second information, and the second information includes at least one of the following information: identifier information of the first network slice, a second network area, second time information, a terminal group identifier, a fourth quantity of users, an identifier of an application function network element, and at least one piece of information about a service requirement. The first network slice serves the second network area, the second network area includes the first network area, and the second network area is a network area in which at least one terminal corresponding to the application function network element is located. The terminal group identifier is an identifier of a group in which the at least one terminal is located, and the third quantity of users is a quantity of terminals corresponding to the at least one terminal. The receiving unit is specifically configured to receive a first response from the data analytics network element or the network management network element, where the first response includes the first information.

In a possible implementation, for specific content of information about a service requirement, refer to related descriptions in the thirteenth aspect. Details are not described herein again.

In a possible implementation, the receiving unit is further configured to obtain the second information.

Optionally, a tenant or service provider of the first network slice may configure the second information on the information determining apparatus via an operator. In this way, the information determining apparatus may locally obtain the second information.

In a possible implementation, when the information determining apparatus is a data analytics network element, the processing unit is specifically configured to obtain second information from a policy control function network element, an application function network element, or a network management network element; and is configured to determine the first information based on the second information.

In a possible implementation, a sending unit is further configured to send third information of at least one network slice in the first network area to the slice management and control network element, where the third information of the at least one network slice includes at least one of the following information: identifier information, third time information, area information, a fifth quantity of users, and information about at least one service, the fourth quantity of users is used to indicate a quantity of users accessing the at least one network slice, and information about a service is used to determine a status of the service.

In a possible implementation, the information about the service includes at least one of the following information corresponding to the service: a service identifier, a third quantity of services, third average service experience, third service experience range information, and third service satisfaction, where the third quantity of services is used to indicate a quantity of users using the service in the at least one network slice.

In a possible implementation, the at least one network slice includes the first network slice.

In a possible implementation, the first network slice is a network slice for transferring background data.

In a possible implementation, a receiving unit is further configured to receive fourth information of the first network slice in the first network area from the slice management and control network element, where the fourth information includes a sixth quantity of users, and the sixth quantity of users is used to indicate a quantity of users allowed to access the first network slice in the first network area. It should be understood that the sixth quantity of users is a quantity that is of users allowed to access the first network slice in the first network area and that is determined by the slice management and control network element. Further, it may be understood that the sixth quantity of users is a quantity of users who are initially allowed to access the first network slice in the first network area after a drive test, after creation, or after signing of an SLA.

In another example, an embodiment of this application further provides an information determining apparatus. The information determining apparatus may be a first network element or a chip used in a first network element. The information determining apparatus includes a communication interface and one or more processors.

The information determining apparatus communicates with another device through the communication interface. When the one or more processors execute instructions, the information determining apparatus performs the information determining method according to any one of the thirteenth aspect or the possible implementations of the thirteenth aspect.

For example, the communication interface is configured to support the information determining apparatus in performing message/data sending and receiving steps performed on a side of the information determining apparatus according to any one of the thirteenth aspect or the possible implementations of the thirteenth aspect. The processor is configured to support the information determining apparatus in performing a message/data processing step performed on a side of the information determining apparatus according to any one of the thirteenth aspect or the possible implementations of the thirteenth aspect. For a specific corresponding step, refer to descriptions in any one of the thirteenth aspect or the possible implementations of the thirteenth aspect. Details are not described herein again.

Optionally, the communication interface and the processor of the information determining apparatus are coupled to each other.

Optionally, the information determining apparatus may further include a memory, configured to store computer program code, and the computer program code includes instructions. Optionally, the processor, the communication interface, and the memory are coupled to each other.

Specifically, in another example of the fifteenth aspect, the communication interface is configured to perform specific steps performed by the receiving unit and the sending unit in the example of the fifteenth aspect. In another example of the fifteenth aspect, the processor is configured to perform a specific step performed by the processing unit in the example of the fifteenth aspect. For example, the sending unit and the receiving unit are replaced with a communication interface, and the processing unit is replaced with a processor.

It should be understood that for related explanations in the fifteenth aspect, refer to related descriptions in the thirteenth aspect. Details are not described herein again.

In one aspect, an embodiment of this application further provides an information sending method. The method includes: An AF network element sends second information to a first network element, where the second information includes at least one of the following information: identifier information of a first network slice, a second network area, second time information, a terminal group identifier, a fourth quantity of users, an identifier of an application function network element, and at least one piece of information about a service requirement. The first network slice serves the second network area, the second network area includes a first network area, and the second network area is a network area in which at least one terminal corresponding to the application function network element is located. The terminal group identifier is an identifier of a group in which the at least one terminal is located, and the third quantity of users is a quantity of terminals corresponding to the at least one terminal. A receiving unit is specifically configured to receive a first response from a data analytics network element or a network management network element, where the first response includes first information. The AF network element receives fourth information of the first network slice in the first network area from the first network element.

According to a sixteenth aspect, an embodiment of this application provides a communication system. The communication system includes the user access control apparatus according to any one of fourteenth aspect or the possible implementations of the fourteenth aspect and the information determining apparatus according to any one of the fifteenth aspect or the various possible implementations of the fifteenth aspect.

According to a seventeenth aspect, an embodiment of this application provides a computer-readable storage medium. The computer-readable storage medium stores instructions. When the instructions are run on a computer, the computer is enabled to perform the user access control method according to any one of the twelfth aspect or the various possible implementations of the twelfth aspect.

According to an eighteenth aspect, an embodiment of this application provides a computer-readable storage medium. The computer-readable storage medium stores instructions. When the instructions are run on a computer, the computer is enabled to perform the information determining method according to any one of the thirteenth aspect or the various possible implementations of the thirteenth aspect.

According to a nineteenth aspect, this application provides a computer program product including instructions. When the instructions are run on a computer, the computer is enabled to perform the user access control method according to any one of the twelfth aspect or the various possible implementations of the twelfth aspect.

According to a twentieth aspect, this application provides a computer program product including instructions. When the instructions are run on a computer, the computer is enabled to perform the information determining method according to any one of the thirteenth aspect or the various possible implementations of the thirteenth aspect.

According to a twenty-first aspect, an embodiment of this application provides a chip. The chip includes a processor and a communication interface. The communication interface is coupled to the processor. The processor is configured to run a computer program or instructions, to implement the user access control method according to any one of the twelfth aspect or the various possible implementations of the twelfth aspect. The communication interface is configured to communicate with another module other than the chip.

According to a twenty-second aspect, an embodiment of this application provides a chip. The chip includes a processor and a communication interface. The communication interface is coupled to the processor. The processor is configured to run a computer program or instructions, to implement the information determining method according to any one of the thirteenth aspect or the various possible implementations of the thirteenth aspect. The communication interface is configured to communicate with another module other than the chip.

### BRIEF DESCRIPTION OF DRAWINGS

FIG. 1 is a schematic diagram in a conventional technology;
FIG. 2 is a schematic structural diagram of a communication system according to an embodiment of this application;
FIG. 3 is a schematic diagram 1 of a 5G network architecture according to an embodiment of this application;
FIG. 4 is a schematic diagram 2 of a 5G network architecture according to an embodiment of this application;
FIG. 5 is a schematic structural diagram of a communication device according to an embodiment of this application;
FIG. 6 to FIG. 12A and FIG. 12B are each a schematic flowchart of interaction between a transfer policy determining method and a policy control method according to an embodiment of this application;
FIG. 13 is a schematic flowchart of a user access control method according to an embodiment of this application;
FIG. 14 to FIG. 17 are each a schematic structural diagram of a communication apparatus according to an embodiment of this application; and
FIG. 18 is a schematic structural diagram of a chip according to an embodiment of this application.

### DESCRIPTION OF EMBODIMENTS

To clearly describe technical solutions in embodiments of this application, terms such as "first" and "second" are used in the embodiments of this application to distinguish between same items or similar items that have basically same functions and purposes. For example, first information and second information are merely used to distinguish between different information, and do not limit sequences of the first information and the second information. A person skilled in the art may understand that the terms, such as "first" and "second", are not intended to limit a quantity or an execution sequence; and the terms, such as "first" and "second", do not indicate a definite difference.

It should be noted that in this application, the term such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the term such as "example" or "for example" is intended to present a relative concept in a specific manner.

A network architecture and a service scenario that are described in the embodiments of this application are intended to describe the technical solutions in the embodiments of this application more clearly, and do not constitute a limitation on the technical solutions provided in the embodiments of this application. A person of ordinary skill in the art may know that: With evolution of the network architecture and emergence of a new service scenario, the technical solutions provided in the embodiments of this application are also applicable to similar technical problems.

In this application, "at least one" means one or more, and "a plurality of' means two or more. The term "and/or" describes an association relationship between associated objects and may indicate three relationships. For example, A and/or B may indicate the following cases: Only A exists, both A and B exist, and only B exists. A and B may be singular or plural. The character "/" generally represents an "or" relationship between the associated objects. "At least one item (piece) of the following" or a similar expression thereof means any combination of these items, including a singular item (piece) or any combination of plural items (pieces). For example, at least one of a, b, or c may indicate: a; b; c; a and b; a and c; b and c; or a, b, and c; where a, b, and c may be singular or plural.

In the embodiments of this application, an example in which a provided method is applied to an NR system or a 5G network is used for description.

FIG. 2 is a schematic diagram of a communication system according to an embodiment of this application. The communication system includes a slice management and control network element 10 and a policy control network element 20 that communicates with the slice management and control network element 10.

The slice management and control network element 10 is configured to determine first information of a network in a first network area, and is configured to send the first information to the policy control network element 20. The first information includes at least one of load information of the network in a first time interval and load information of at least one network slice in the first time interval, and the network includes the at least one network slice.

The policy control network element 20 is configured to receive the first information of the network in the first network area from the slice management and control network element 10, and is configured to determine, based on the first information, a service data transfer policy of a terminal located in the first network area.

In the communication system provided in this embodiment of this application, the policy control network element obtains, from the slice management and control network element, at least one of the load information of the network in the first network area in the first time interval and the load information of the at least one network slice in the first time interval; and determines, based on the at least one of the load information of the network in the first time interval and the load information of the at least one network slice in the first time interval, the service data transfer policy of the terminal located in the first network area. Because the load information of the network in the first time interval usually reflects whether the network is in an idle state, the load information of the at least one network slice in the first time interval may be used to determine the load information of the network. If the network is in an idle state, it means that the network has an idle resource at this moment. To be specific, the network still has an idle resource while satisfying a requirement of a third party. Therefore, the policy control network element may determine the service data transfer policy of the terminal based on the status of the network. In this way, service data transfer of the terminal can be prevented from affecting running quality of the network. In addition, idle resources of the network can be fully used.

Optionally, the service data transfer policy includes a second time interval, and the second time interval is a time interval that is in the first time interval and in which the load information of the network satisfies a preset network load requirement.

Optionally, when the first information includes the load information of the at least one network slice in the first time interval, the policy control network element 20 is further configured to determine the load information of the network in the first time interval based on the load information of the at least one network slice in the first time interval.

Optionally, the policy control network element 20 is further configured to send a first request to the slice management and control network element 10, so that the slice management and control network element 10 receives the first request. The first request is used to request the first information, the first request includes second information, the second information includes an identifier of a second network area, and the second network area includes the first network area.

Optionally, the communication system may further include a data analytics network element 30. The slice management and control network element 10 is configured to obtain third information from the data analytics network element 30, where the third information includes at least one of the following information corresponding to the at least one network slice: identifier information, time information, area information, a second quantity of users, a second data volume, and service information. The service information is used to determine a status of a service in the network slice.

Optionally, the communication system shown in FIG. 2 may be applied to a current 5G network and another future network that emerges in the future. This is not specifically limited in the embodiments of this application.

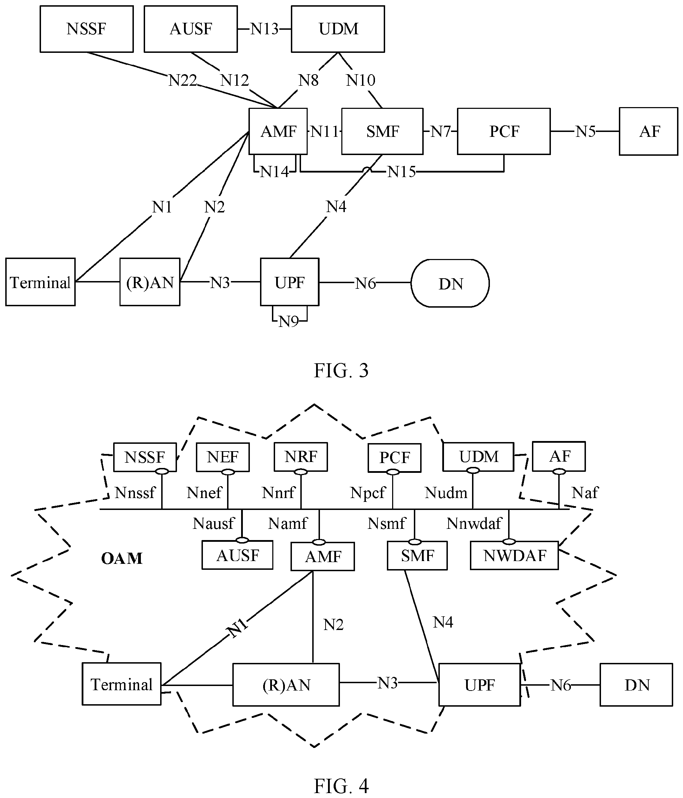

An example in which the communication system shown in FIG. 2 is applicable to a 5G network architecture is used below. For example, the communication system shown in FIG. 2 is applicable to a 5G network architecture in a non-roaming scenario shown in FIG. 3.

It should be understood that the slice management and control network element 10 and the data analytics network element 30 may be network elements in a 5GC, or may be network management network elements.

For example, the communication system shown in FIG. 2 is applied to an interface-based architecture in a current non-roaming 5G network architecture. In this case, as shown in FIG. 3, a network element or an entity corresponding to the slice management and control network element 10 may be a network slice selection function (Network Slice Selection Function, NSSF) network element in a 5GC in the structure shown in FIG. 3. The slice management and control network element 10 may alternatively be a network slice selection function (network slice management function, NSMF) network element, a radio access network slice subnet management function (radio access network slice subnet management function, RAN-NSSMF) network element, a core network slice subnet management function (core network slice subnet management function, CN-NSSMF) network element, or a transport network slice subnet management function (transfer network slice subnet management function, TN-NSSMF) network element in a network management network element.

The policy control network element 20 may be a policy control function (Policy Control Function, PCF) network element in the non-roaming 5G network architecture.

The data analytics network element 30 may be a network data analytics function (network data analytics function, NWDAF) network element in the 5GC, may be a management data analytics function (Management Data Analytics Function, MDAF) network element in the network management network element, or may even be a data analytics network element on a RAN side.

In addition, as shown in FIG. 3, the non-roaming 5G network architecture may further include: an access device (for example, an access network (access network, AN) or a radio access network (radio access network, RAN)), a user plane function (user plane function, UPF) network element, a data network (data network, DN), an access and mobility management function (Access and Mobility Management Function, AMF) network element, an authentication server function (authentication server function, AUSF) network element, a session management function (Session Management Function, SMF) network element, a unified data repository (Unified Data Repository, UDR), a unified data management (Unified Data Management, UDM), a binding support function (binding support function, BSF), a network exposure function (network exposure function, NEF) network element, a network repository function (network repository function, NRF) network element, an application function (application function, AF) network element, and the like. This is not specifically limited in this embodiment of this application.

A terminal communicates with the AMF network element through a next generation (Next generation, N1) network interface (N1 for short). The access device communicates with the AMF network element through an N2 interface (N2 for short). The access device communicates with the UPF network element through an N3 interface (N3 for short). The UPF network element communicates with the DN through an N6 interface (N6 for short). The UPF network element communicates with the SMF network element through an N4 interface (N4 for short). The AMF network element communicates with the SMF network element through an N11 interface (N11 for short). The AMF network element communicates with the UDM network element through an N8 interface (N8 for short). The SMF network element communicates with the PCF network element through an N7 interface (N7 for short). The SMF network element communicates with the UDM network element through an N10 interface (N10 for short). The AMF network element communicates with the AUSF network element through an N12 interface (N12 for short). The AMF network element communicates with the NSSF network element through an N22 interface (N22 for short). The AUSF network element communicates with the UDM network element through an N13 interface (N13 for short). The UDM network element communicates with the UDR network element. A PCF network element communicates with the UDR network element. The BSF network element communicates with the PCF network element and the SMF network element.

FIG. 4 shows an architecture based on a service-oriented interface in a non-roaming 5G network architecture. A difference between the architecture and that in FIG. 3 lies in that control plane network elements in a 5GC in FIG. 4 may also interact with each other through a service-oriented interface. For example, an AMF network element, an AUSF network element, an SMF network element, a UDM network element, a UDR network element, an NRF network element, an NEF network element, an NSSF network element, or a PCF network element performs interaction through a service-oriented interface. For example, an external service-oriented interface provided by the AMF network element may be Namf. An external service-oriented interface provided by the SMF network element may be Nsmf. An external service-oriented interface provided by the UDM network element may be Nudm. An external service-oriented interface provided by the UDR network element may be Nudr. An external service-oriented interface provided by the PCF network element may be Npcf. An external service-oriented interface provided by a BSF network element may be Nbsf. An external service-oriented interface provided by the NEF network element may be Nnef. An external service-oriented interface provided by the NRF network element may be Nnrf. An external service-oriented interface provided by the NSSF network element may be Nnssf. An external service-oriented interface provided by an NWDAF network element may be Nnwdaf. It should be understood that, for related descriptions of names of various service-oriented interfaces in FIG. 4, refer to a 5G system architecture (5G system architecture) diagram in the 23501 standard. Details are not described herein.

It should be noted that FIG. 3 and FIG. 4 show only examples of a PCF network element. Certainly, the non-roaming 5G network architecture may include a plurality of PCF network elements, for example, include a PCF network element 1 and a PCF network element 2. This is not specifically limited in this embodiment of this application. For a manner in which network elements are connected, refer to the non-roaming 5G network architecture shown in FIG. 3 or FIG. 4. Details are not described herein again.

It should be understood that when the terminal may access the system shown in FIG. 3 or FIG. 4 via the access device, a network element (for example, the slice management and control network element 10) in a 5G core network (5G core network, 5GC) allocates one or more network slices to the terminal. Each network slice may include one or more of a UPF network element, an SMF network element, an NRF network element, and a PCF network element. The plurality of network slices may share some network functions. A set of the shared network functions may be referred to as a common control network function (Common Control Network Function, CCNF). For example, the CCNF may include one more of the AMF network element and the NSSF network element. Each network slice is corresponding to at least one access device.

One slice management and control network element 10 may manage a plurality of AMF network elements. An access device accesses a core network via an AMF network element, and one AMF network element may manage a plurality of access devices.

Network slicing refers to customization of different logical networks on a physical or virtual network infrastructure based on different service requirements. The network slice may be a complete end-to-end network that includes a terminal, an access network, a transport network, a core network, and an application server, can provide a complete communication service, and has a specific network capability. The network slice may be a communication resource that ensures that a bearer service or a service can satisfy a requirement of a service level agreement (service level agreement, SLA); or may be considered as a combination of a network function and a communication resource that are required to complete a communication service or some communication services.

One network slice is corresponding to one slice type, and is identified by a single network slice selection assistance information (Single Network Slice Selection Assistance Information, S-NSSAI). One network slice may have a plurality of network slice instances (network slice instance, NSI), to distinguish between different tenants and different areas.

The NSI is an actually operating logical network and can satisfy a particular network feature or service requirement. A complete network slice instance may provide a complete end-to-end network service. The network slice instance may include one or more network slice subnet instances (network slice subnet instance, NSSI) and one or more network functions (network function, NF).

Access devices in the embodiments of this application may include a RAN device, an AN device, a gNodeB device, an eNodeB device, a universal terrestrial radio access network (universal terrestrial radio access network, UTRAN) device, and an E-UTRAN (Evolved UTRAN, evolved UTRAN) device.

As shown in FIG. 3 or FIG. 4, an OAM network element may cover network elements in an access network and a core network, and may collect data from these network elements in the access network and the core network.

It should be noted that both a 3rd AF network element and an operator AF in FIG. 3 or FIG. 4 are AF network elements. A difference lies in that the 3rd AF network element (for example, a WeChat service server and an Alipay payment service server) is not controlled by an operator, but the operator AF network element (for example, a proxy-call session control function (proxy-call session control function, P-CSCF) network element in an IP multimedia system) is controlled by the operator. When the 3rd AF network element interacts with the NWDAF network element, the NEF network element needs to be notified.

It should be noted that names of the interfaces between the network elements in FIG. 3 or FIG. 4 are merely examples, and the interfaces may have other names in a specific implementation. This is not specifically limited in the embodiments of this application.

It should be noted that the access device, the AF network element, the AMF network element, the SMF network element, the AUSF network element, the UDM network element, the UPF network element, the PCF network element, and the like in FIG. 3 or FIG. 4 are merely names, and the names do not constitute any limitation on the devices. In a 5G network and another future network, network elements corresponding to the access device, the AF network element, the AMF network element, the SMF network element, the AUSF network element, the UDM network element, the UPF network element, and the PCF network element may have other names. This is not specifically limited in the embodiments of this application. For example, the UDM network element may alternatively be replaced with a home subscriber server (home subscriber server, HSS), a user subscription database (user subscription database, USD), a database entity, or the like. A general description is provided herein, and details are not described again below.

Optionally, the terminal (terminal) in the embodiments of this application may include various handheld devices, vehicle-mounted devices, wearable devices, or computing devices that have a wireless communication function, or another processing device connected to a wireless modem; may further include a subscriber unit (subscriber unit), a cellular phone (cellular phone), a smartphone (smart phone), a wireless data card, a personal digital assistant (personal digital assistant, PDA) computer, a tablet computer, a wireless modem (modem), a handheld device (handheld), a laptop computer (laptop computer), a cordless phone (cordless phone) or a wireless local loop (wireless local loop, WLL) station, a machine type communication (machine type communication, MTC) terminal, user equipment (user equipment, UE), a mobile station (mobile station, MS), a terminal device (terminal device), relay user equipment, or the like. The relay user equipment may be, for example, a 5G residential gateway (residential gateway, RG). For ease of description, in this application, the devices mentioned above are collectively referred to as a terminal.

Optionally, the access device in the embodiments of this application is a device that accesses a core network, and may be, for example, a base station, a broadband network gateway (broadband network gateway, BNG), an aggregation switch, or a non-3rd generation partnership project (3rd generation partnership project, 3GPP) access device. There may be base stations in various forms, for example, a macro base station, a micro base station (also referred to as a small cell), a relay station, and an access point.

It should be understood that when the terminal may access the system shown in FIG. 3 or FIG. 4 via the access device, a network element (for example, the NSSF network element) in the 5G core network (5G core network, 5GC) allocates one or more network slices to the terminal. Each network slice may include one or more of the UPF network element, the SMF network element, the NRF network element, and the PCF network element.

Functions of the network elements in FIG. 3 or FIG. 4 are as follows:
Main functions of the UPF network element include functions related to a user plane, for example, data packet routing and transfer, packet detection, service usage reporting, quality of service (Quality of Service, QoS) processing, lawful interception, uplink packet detection, and downlink data packet storage.

Main functions of the AMF network element include functions related to access and mobility, for example, connection management, mobility management, registration management, access authentication and authorization, reachability management, or security context management.

Main functions of the SMF network element include functions of related to a session, for example, session management (such as session establishment, modification, and release, including maintenance of a tunnel between the UPF network element and the AN device), selection and control of the UPF network element, service and session continuity (Service and Session Continuity, SSC) mode selection, or roaming.

Main functions of the PCF network element include functions related to a policy, for example, formulating a unified policy, providing policy control, and obtaining subscription information related to a policy decision from the UDR.

Main functions of the NSSF network element include: selecting a group of network slice instances for the terminal, determining an allowed NSSAI, determining an AMF network element set that can serve the terminal, or the like.

Main functions of the NRF network element include a service discovery function and maintenance of a network function (Network Function, NF) profile of an available NF instance and a service supported by the NF instance.

The AF network element interacts with a 3GPP core network to provide a service, including interacting with the NEF, interacting with a policy architecture, or the like.

Main functions of the NEF network element include: securely opening, to inside, a third party, or the like, a service and a capability that are provided by a 3GPP network function; and converting or translating information exchanged with the AF and information exchanged with an internal network function, for example, an AF service identifier and internal 5G core network information such as a DNN and an S-NSSAI.

The UDM supports processing of a letter of credence for authentication, user identity processing, access authorization, registration and mobility management, subscription management, short message management, or the like in a 3GPP authentication key agreement mechanism.

The AUSF network element interacts with the UDM to obtain user information, and performs an authentication-related function, for example, generating an intermediate key.

The UDR is configured to store subscription data (Subscribed Data), policy data (Policy Data), application data (Application Data), and the like.

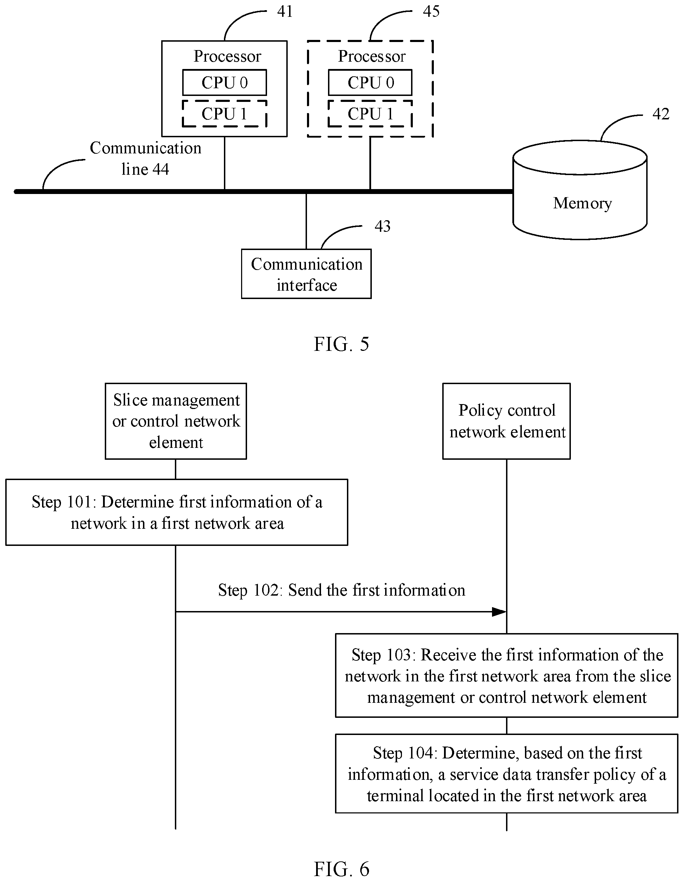

FIG. 5 is a schematic diagram of a hardware structure of a communication device according to an embodiment of this application. The communication device includes a processor 41, a communication line 44, and at least one communication interface (where in FIG. 5, that the communication device includes a communication interface 43 is merely used as an example for description).

Optionally, the communication device may further include a memory 42.

The processor 41 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 44 may include a path for transferring information between the foregoing components.

The communication interface 43, an apparatus using any transceiver, is configured to communicate with another device or a communication network such as an Ethernet, a radio access network (radio access network, RAN), or a wireless local area network (wireless local area networks, WLAN).

The memory 42 may be a read-only memory (read-only memory, ROM) or another type of static storage device that can store static information and an instruction, or a random access memory (random access memory, RAM) or another type of dynamic storage device that can store information and an instruction, or may also be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a blu-ray optical disc, or the like), a magnetic disk storage medium or another magnetic storage device, or any other computer-accessible medium that can be used to carry or store desired program code in an instruction or a data structure form, but is not limited thereto. The memory may exist independently, and is connected to the processor through the communication line 44. The memory may alternatively be integrated with the processor.

The memory 42 is configured to store computer execution instructions for performing the solutions of this application, and the processor 41 controls execution of the computer execution instructions. The processor 41 is configured to execute the computer execution instructions stored in the memory 42, to implement a policy control method provided in the following embodiment of this application.

Optionally, the computer execution instructions in this embodiment of this application may also be referred to as application program code. This is not specifically limited in this embodiment of this application.

In a specific implementation, in an embodiment, the processor 41 may include one or more CPUs, for example, a CPU 0 and a CPU 1 in FIG. 5.

In a specific implementation, in an embodiment, the communication device may include a plurality of processors, for example, the processor 41 and a processor 45 in FIG. 5. Each of the processors may be a single -core (single-CPU) processor, or a multi-core (multi-CPU) processor. The processor herein may be one or more devices, circuits, and/or processing cores configured to process data (for example, a computer program instruction).

With reference to FIG. 2 to FIG. 4, the following describes in detail a transfer policy determining method and a policy control method that are provided in the embodiments of this application.

It should be noted that in the following embodiments of this application, names of messages between network elements, names of parameters in messages, or the like are merely examples, and may be other names in a specific implementation. This is not specifically limited in the embodiments of this application.

It should be noted that mutual reference may be made between the embodiments of this application. For example, for same or similar steps, mutual reference may be made between the method embodiments, the communication system embodiments, and the apparatus embodiments. This is not limited.

The transfer policy determining method in the embodiments of this application may be performed by a policy control network element, or may be performed by a chip used in a policy control network element. The policy control method may be performed by a slice management and control network element, or may be performed by a chip used in a slice management and control network element. In the following embodiments, an example in which the policy control method is performed by a slice management and control network element, and the transfer policy determining method is performed by a policy control network element is used.

For example, the transfer policy determining method provided in the embodiments of this application is applied to the communication system shown in FIG. 2. FIG. 6 is a schematic diagram of interaction between a transfer policy determining method and a policy control method according to an embodiment of this application. The method includes the following steps.

Step 101: A slice management and control network element determines first information of a network in a first network area.

The first information includes load information of the network in a first time interval and/or load information of at least one network slice in the first time interval. The network includes the at least one network slice.

The load information of the network in the first time interval or the load information of the at least one network slice in the first time interval may help a policy control network element generate a service data transfer policy of a service in the at least one network slice, where the service data transfer policy includes service data transfer time information. Optionally, the service data transfer time information is in the first time interval.

For example, the service data transfer time information may be one or more of a time interval (Time Interval), a time window (Time Window), or a timestamp (Timestamp).

For example, the first information includes the load information of the network in the first time interval. Alternatively, the first information includes the load information of the network in the first time interval and the load information of the at least one network slice in the first time interval. Alternatively, the first information includes the load information of the at least one network slice in the first time interval.

It should be understood that the load information of the at least one network slice in the first time interval may be load information of each of the at least one network slice in the first time interval.

For example, the load information of the network in the first time interval is used to reflect a network status of the network in the first time interval. For example, the load information of the network may be at least one of a load level, a congestion level, or performance of the network.

It should be understood that the load information of the at least one network slice may be load information, a congestion level, or performance of each of the at least one network slice.

For example, load information of any one of the at least one network slice is used to reflect a status of the network slice.

For example, load information of a network slice may be at least one of a congestion level of the network slice, a load level of the network slice (Slice Load Level), a relationship between quality of the network slice and a quality requirement of the network slice, or performance of the network slice.

The relationship between the quality of the network slice and the quality requirement of the network slice may be referred to as fulfilment information of the network slice (Slice SLA fulfilment information).

For example, there are five slice load levels, and values of different slice load levels may have the following meanings: 1. indicating extremely light load; 2. indicating light load; 3. indicating normal load; 4. indicating congestion; 5. indicating extreme congestion.

It should be understood that a relationship between quality of the at least one network slice and a quality requirement of the network slice may be understood as a relationship between quality of each of the at least one network slice and a quality requirement of the network slice. Because the at least one network slice affects each other in terms of running quality after the at least one network slice is added to a same network, quality of a network slice may be usually understood as a degree to which a network in which the network slice is located satisfies an SLA of the network slice.

For example, in this embodiment of this application, the quality of the network slice may be represented by a percentage (for example, the degree to which the network in which the network slice is located satisfies the SLA of the network slice is 90%, namely, underfitting), and the quality requirement of the network slice is also represented by a percentage. Therefore, the relationship between the quality of the network slice and the quality requirement of the network slice may be determined based on a value relationship between the quality of the network slice and the quality requirement of the network slice.

For example, the relationship between the quality of the network slice and the quality requirement of the network slice includes: The quality of the network slice is higher than quality required by the quality requirement of the network slice. For example, the slice SLA fulfilment information is 120%. That is, a current network can satisfy the quality requirement of the slice by 120%. It may also be understood that running quality of the network slice in the network is good. Alternatively, the quality of the network slice is lower than the quality required by the quality requirement of the network slice. For example, the slice SLA fulfilment information is 80%. That is, the current network can satisfy the quality requirement of the slice only by 80%. It may also be understood that the running quality of the network slice in the network is poor. Alternatively, the quality of the network slice is equal to the quality required by the quality requirement of the network slice. For example, the slice SLA fulfilment information is 100% or 99.99%. That is, the current network can satisfy the quality requirement of the slice by 100% or 99.99%. The running quality of the network slice in the network is good.

It should be explained that, that the quality of the network slice is equal to the quality required by the quality requirement of the network slice does not mean that the quality of the network slice is completely equal to the quality required by the quality requirement of the network slice. As long as the quality of the network slice is close to the quality required by the quality requirement of the network slice or a fluctuation of the quality of the network slice relative to the quality requirement of the network slice is not large, it may be understood as that the quality of the network slice is equal to the quality required by the quality requirement of the network slice.

It should be understood that the first network area in this embodiment of this application may include at least one network area in which the network or the at least one network slice in step 101 is located.

The network area in the embodiments of this application may be at least one of a tracking area (tracking area, TA), a TA list, a routing area (routing area, RA), an RA list, a cell (cell), a cell list (Cell list), or a global positioning system location (GPS (Global Position System, physical area) or a GPS list (GPS list)). The TA list includes at least one TA. The RA list includes at least one RA. The cell list includes at least one cell. For all network areas in the embodiments of this application, refer to the descriptions herein. A general description is provided herein, and details are not described again below.

For example, the first network area is a TA, and the first network area may include a TA 1, a TA 2, and a TA 3. In this case, the network in step 101 is a network 1 in the TA 1, a network 2 in the TA 2, and a network 3 in the TA 3.

The first time interval in this embodiment of this application includes at least one time interval. The load information of the network in the first time interval may be load information of the network in each of at least one time interval. The load information of the at least one network slice in the first time interval may be load information of the network slice in each of the at least one time interval.

For example, the first time interval may be a timestamp or a time window. For example, the first time interval includes: 22:00 on November 20, 2018 to 08:00 on November 21, 2018, 22:00 on November 21, 2018 to 08:00 on November 22, 2018, and 22:00 on November 22, 2018 to 08:00 on November 23, 2018.

Step 102: The slice management and control network element sends the first information of the network in the first network area to the policy control network element.

For example, when sending the first information to the policy control network element, the slice management and control network element may further send an identifier of the network corresponding to the first information and an identifier of the first network area.

For example, step 102 may be specifically implemented in the following manner: The slice management and control network element may send a network slice availability notify response (Nnssf_NSSAIAvalability_Notify response) to the policy control network element, so that the policy control network element can obtain the first information from the network slice availability notify response. The network slice availability notify response carries the first information.

Step 103: The policy control network element receives the first information of the network in the first network area from the slice management and control network element.

Step 104: The policy control network element determines, based on the first information, a service data transfer policy of a terminal located in the first network area.

Optionally, the policy control network element may determine, by receiving the load information of the network in the first time interval from the slice management and control network element, whether the network is in an idle state or a non-idle state in the first time interval.

For example, if the load level or congestion level of the network in the first time interval is less than or equal to a first threshold, it indicates that load of the network in the first time interval is less than a first threshold, the network is not congested in the first time interval, or the network is in an idle state in the first time interval. In this case, the policy control network element may determine to transfer service data (for example, background data) of the terminal in the first time interval. If the load level or congestion level of the network in the first time interval is greater than the first threshold, it indicates that the network is overloaded or congested in the first time interval, or the network is in a non-idle state in the first time interval.

The slice management and control network element sends the load information of the at least one network slice in the first time interval to the policy control network element. When a load level or congestion level of any one of the at least one network slice in the first time interval is less than or equal to a second threshold, it indicates that in the first time interval, load of the network slice is less than the second threshold or the network slice is not congested. If the load level or congestion level of any one of the at least one network slice in the first time interval is greater than the second threshold, it indicates that in the first time interval, the network slice is overloaded or congested.

Optionally, the service data in the embodiments of this application is background data (Background Data, BD), and may also be referred to as background data.

In this embodiment of this application, the background data is traffic generated in a transfer process of service data that has no requirement on (or is insensitive to) transfer timeliness. Alternatively, the background data is traffic generated in a transfer process of service data that has no requirement on transfer timeliness but has a high requirement on (or is sensitive to) pricing. Alternatively, a network slice used for transferring background data has no SLA requirement. To be specific, as long as the network allows transfer of the background data, there is no requirement on transfer quality (for example, a transfer delay or transfer bandwidth). Therefore, the background data may be transferred when the network is idle.

In the transfer policy determining method provided in this embodiment of this application, the policy control network element obtains, from the slice management and control network element, the load information of the network in the first network area in the first time interval and/or the load information of the at least one network slice in the first time interval. Because the load information of the network in the first time interval usually reflects whether the network is in an idle state, the load information of the at least one network slice in the first time interval may be used to determine the load information of the network. Therefore, a status of the network in the first time interval can be obtained. If the network is in an idle state, it means that the network has an idle resource at this moment. To be specific, the network still has an idle resource while satisfying running quality of the at least one network slice. Therefore, the policy control network element may determine the service data transfer policy of the terminal based on the status of the network in the first time interval. In this way, service data transfer of the terminal can be prevented from affecting running quality of the at least one network slice in the network. In addition, idle resources of the network can be fully used.

In an optional implementation, the service data transfer policy in this embodiment of this application includes a second time interval, and the second time interval is a time interval that is in the first time interval and in which the load information of the network satisfies a preset network load requirement. In this case, when the terminal transfers the service data in the second time interval in the network, the running quality of the at least one network slice in the network is not affected, and all idle resources of the network can be fully used.

For example, the second time interval is a time interval that is in the first time interval and in which the load level of the network is less than or equal to a preset network load requirement. Alternatively, the second time interval is a time interval that is in the first time interval and in which the congestion level of the network is less than or equal to a preset network congestion requirement. Alternatively, the second time interval includes a time interval that is in the first time interval and in which the congestion level of the network is less than or equal to a preset network congestion requirement and a time interval that is in the first time interval and in which the load level of the network is less than or equal to a preset network load requirement. That is, the second time interval is a time interval in which the network is in an idle state.

The preset network load requirement and the preset network congestion requirement are not limited in this embodiment of this application. The preset network load requirement and the preset network congestion requirement may be obtained by the policy control network element from an AF network element, or may be configured by a network management network element for the policy control network element.

It should be understood that the second time interval in this embodiment of this application includes at least one time interval. The at least one time interval may be continuous time interval, or may be discontinuous time interval. This is not limited in this embodiment of this application.

In some optional implementations, the method provided in this embodiment of this application may further include: The policy control network element determines the second time interval.

For example, the policy control network element may determine the second time interval in any one of the following manner a or manner b.

Manner a: The policy control network element determines the second time interval based on at least one of the load information of the network in the first time interval and the load information of the at least one network slice in the first time interval.

For example, the first time interval is a time interval from T1-T5 . If the network is in an idle state in time interval T1-T3, and the network is in a non-idle state in time interval T4-T5, the policy control network element may determine that the second time interval is the time interval T1-T3.

Manner b: The policy control network element receives, from the slice management and control network element, information used to indicate the second time interval. The policy control network element determines the second time interval based on the information used to indicate the second time interval.

In a case shown in the manner b, the slice management and control network element determines the second time interval, and sends information about the second time interval to the policy control network element.

In this embodiment of this application, for a process in which the slice management and control network element determines the second time interval, refer to a process in which the policy control network element determines the second time interval in the manner a. Specifically, the policy control network element in the manner a is replaced with the slice management and control network element. Details are not described herein again.

For example, the information used to indicate the second time interval may be a start time and duration of the second time interval. Alternatively, the information used to indicate the second time interval may be a start time and an end time of the second time interval, namely, the second time interval.

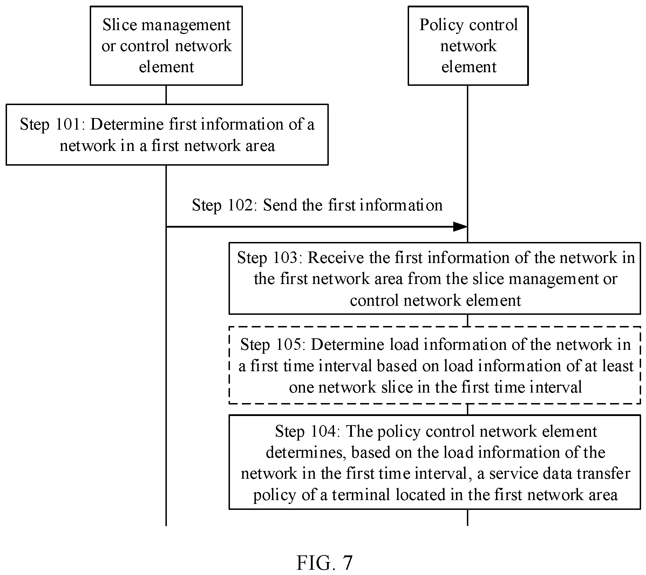

In an optional implementation, when the first information includes the load information of the at least one network slice in the first time interval, as shown in FIG. 7, before step 104, the method provided in this embodiment of this application further includes the following step:
Step 105: The policy control network element determines the load information of the network in the first time interval based on the load information of the at least one network slice in the first time interval.

For example, if the policy control network element determines that a load level or congestion level of any one of the at least one network slice in the first time interval is less than or equal to a third threshold, it indicates that the load information of the network in the first time interval is that the network is not congested or is in an idle state. Alternatively, if the policy control network element determines that load levels or congestion levels of all or some network slices in the at least one network slice in the first time interval are less than or equal to the third threshold, it indicates that the load information of the network in the first time interval is that the network is not congested or is in an idle state.

For example, if the policy control network element determines that a load level or congestion level of one of the at least one network slice in the first time interval is greater than the third threshold, it indicates that the load information of the network in the first time interval is that the network is congested or is in a non-idle state. Alternatively, if the policy control network element determines that load levels or congestion levels of all or some network slices in the at least one network slice in the first time interval are greater than the third threshold, it indicates that the load information of the network in the first time interval is that the network is congested or is in a non-idle state.

It should be understood that a process in which the policy control network element determines the load information of the network in the first time interval based on the load information of the at least one network slice in the first time interval is implemented inside the policy control network element. The foregoing method is only an example.

It should be understood that the policy control network element may alternatively determine the load information of the network in the first time interval based on the load information of the at least one network slice in the first time interval and a local operator policy (for example, logic of comparing the load level or congestion level of the foregoing network slice with the third threshold).

Specifically, step 104 may be implemented in the following manner: The policy control network element determines, based on the load information of the network in the first time interval, the service data transfer policy of the terminal located in the first network area.

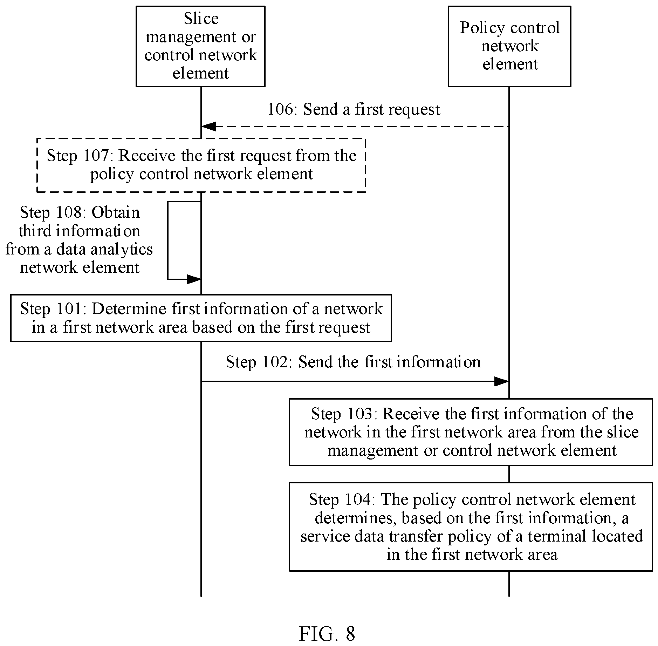

Optionally, in some optional embodiments, as shown in FIG. 8, the method provided in this embodiment of this application further includes the following steps.

Step 106: The policy control network element sends a first request to the slice management and control network element, where the first request is used to request the first information.

The first request includes second information, the second information includes an identifier of a second network area, and the second network area includes the first network area.

For example, the first request may be a network slice availability notify request (Nnssf NSSAIAvalabilityNotify request).

The second network area is used by the slice management and control network element to determine to obtain load information of a network in a specified network area or load information of at least one network slice.

On one hand, the first network area and the second network area may be the same. For example, if the second network area includes a TA list, the first network area may be at least one TA included in the TA list.

On the other hand, the first network area may alternatively be a subset of the second network area. For example, the first network area may be a part of at least one TA included in the TA list. This is not limited in this embodiment of this application.

Optionally, in an optional implementation of this application, the method provided in this embodiment of this application further includes: The policy control network element determines, based on an obtained service data transfer requirement, to perform step 101.

The service data transfer requirement is used to indicate a desired service data transfer policy of a service providing server.

For example, the policy control network element may obtain the service data transfer requirement in the following manner: For example, the policy control network element receives the service data transfer requirement from an application function network element or the slice management and control network element. For another example, the service data transfer requirement may be configured by an operator on the policy control network element.

Specifically, the network management network element sends the service data transfer requirement to the slice management and control network element. Alternatively, the operator configures the service data transfer requirement on the slice management and control network element, and then the policy control network element obtains the service data transfer requirement from the slice management and control network element.

Optionally, the application function network element may be managed and controlled by a network slice tenant. For example, the policy control network element may receive the service data transfer requirement from the application function network element via an NEF network element.

For example, content in the service data transfer requirement may be shown in a table 1:

**Table 1 Content of the service data transfer requirement**

| Requirement information | Data source | Description |
|---|---|---|
| Application service provider (Application Service Provider, ASP) identifier (ASP ID) | AF network element | Identifier of a service server or an AF network element, which may be considered as a network element used by an application service provider for service management |
| Volume per UE | | First volume of data to be transferred by each terminal |
| Number of UEs | | Quantity of terminals transferring background data |
| Desired time windows | | Desired transfer time window of a service server (for example, a third time interval) |
| Network area information (optional) | | Network area in which a terminal is located |

Optionally, in this embodiment of this application, before step 106, the method may further include: The slice management and control network element determines the second network area.

Example 1: If the service data transfer requirement carries information used to determine the second network area, the policy control network element determines the second network area based on the information used to determine the second network area.

For example, the information used to determine the second network area may be the identifier of the second network area or first indication information, where the first indication information is used to determine an identifier of a terminal located in the second network area (for example, a terminal identifier list, where the terminal identifier list includes an identifier of at least one terminal located in the second network area).

For example, the first indication information is the identifier of the terminal located in the second network area, or is a terminal group identifier (UE group ID).

Optionally, the example 1 may be implemented in any one of the following manner 1 or manner 2:
Manner 1: If the service data transfer requirement carries the identifier of the second network area, the policy control network element determines the second network area based on the identifier of the second network area.

An identifier of a network area in this embodiment of this application may be any one of a tracking area identity (Tracking Area identity, TAI), a TA list identifier, an RA identifier, an RA list identifier, a cell identifier, or a cell list identifier. A general description is provided herein, and details are not described below.

Manner 2: If the service data transfer requirement carries the first indication information, the policy control network element determines, based on the first indication information, the identifier of the terminal located in the second network area. In this case, the policy control network element queries a data analytics network element based on the identifier of the terminal located in the second network area, to obtain at least one network area corresponding to the identifier of the terminal located in the second network area, and determines the obtained at least one network area as the second network area.

For example, the identifier of the terminal in this embodiment of this application may be one or more of the following: an internet protocol (internet protocol, IP) address, a subscription permanent identifier (subscription permanent identifier, SUPI), a permanent equipment identifier (permanent equipment identifier, PEI), a generic public subscription identifier (generic public subscription identifier, GPSI), an international mobile subscriber identity (international mobile subscriber identifier, IMSI), an international mobile equipment identity (international mobile equipment identity, IMEI), an IP 5-tuple (5-tuple), and a mobile station international integrated service digital network number (mobile station international integrated service digital network number, MSISDN). For identifier information of the terminal in the following embodiments, refer to the descriptions herein. Details are not described again below.

It should be understood that, if the first indication information is a terminal identifier list, that the policy control network element determines, based on the first indication information, the identifier of the terminal located in the second network area includes: The policy control network element determines, based on the terminal identifier list, at least one terminal indicated by the terminal identifier list. If the first indication information is a UE group ID, the policy control network element queries a UDM based on the UE group ID, to obtain at least one terminal included in the terminal group, to obtain the terminal identifier list.

Example 2: If the service data transfer requirement does not carry the information used to determine the second network area, the policy control network element may query the data analytics network element based on the ASP ID to obtain a terminal identifier list registered with an application function network element identified by the ASP ID, then query the data analytics network element based on the terminal identifier list to obtain a network area corresponding to the terminal identifier list, and determine that the network area corresponding to the terminal identifier list is the second network area. Alternatively, the policy control network element directly queries the data analytics network element based on the ASP ID, to obtain a network area corresponding to a terminal registered with the application function network element identified by the ASP ID.

Step 107: The slice management and control network element receives the first request from the policy control network element.

Correspondingly, step 101 may be implemented in the following manner: The slice management and control network element determines the first information of the network in the first network area based on the first request.

In an optional implementation, the second information described in step 106 may further include information used to indicate the first time interval. In this case, the slice management and control network element may receive the second information from the policy control network element.

Optionally, the second information further includes the service data transfer requirement. The service data transfer requirement is used to indicate the desired service data transfer policy of the service providing server.

For example, the service data transfer requirement may further include at least one of the following information: the third time interval, a first quantity of users that is corresponding to the terminal, a first data volume corresponding to the terminal, an identifier of the terminal, and an identifier of an application function network element corresponding to a service providing server serving the terminal. In this case, the slice management and control network element may determine, based on information in the service data transfer requirement, a network quality requirement of a network slice used by a user to transfer the service.

It should be understood that the terminal in this embodiment of this application may be at least one terminal in the first network area.

The third time interval is used to indicate a service data transfer time, desired by the service providing server, of each of the at least one terminal. The first quantity of users is used to indicate a quantity of terminals for which the service providing server expects to transfer service data.

The first data volume corresponding to the terminal may be a first data volume corresponding to at least one terminal in the first network area, namely, a size of a service data volume that needs to be transferred by the at least one terminal. The identifier of the terminal may be an identifier of the at least one terminal in the first network area. The service providing server serving the terminal may include a service server serving each of the at least one terminal.

For example, the third time interval may include at least one time interval.

It should be understood that, in this embodiment of this application, the third time interval is the service data transfer time, desired by the service providing server, of the terminal, and the first time interval is a time interval of the load information of the network or load information of the at least one network slice that is collected by the slice management and control network element. The first time interval may be a subset of the third time interval, and the second time interval may not have an intersection with the third time interval. This is not limited in this embodiment of this application.

In some optional embodiments, as shown in FIG. 8, the method provided in this embodiment of this application may further include the following step:
Step 108: The slice management and control network element obtains third information from the data analytics network element.

For example, the slice management and control network element receives a data analytics information request response (Nnwdaf AnalyticsInfoRequest response) from the data analytics network element. The data analytics information request response carries the third information.

The third information includes at least one of the following information corresponding to the at least one network slice: identifier information, time information, area information, a second quantity of users, a second data volume, and service information. The service information is used to determine a status of a service in any network slice.

It should be understood that the third information received by the slice management and control network element from the data analytics network element is used to reflect a status of each of the at least one network slice in the current network.

In this embodiment of this application, a second quantity of users of any network slice is used to indicate a quantity of users accessing the network slice.

In this embodiment of this application, a second data volume of any one of the at least one network slice is used to indicate a data volume of the network slice.

For example, the service information includes a service identifier (Application ID) corresponding to the service, and at least one of the following information: a quantity of services, first average service experience, first service experience range information, and first service satisfaction. The quantity of services is used to indicate a quantity of services that can be satisfied by a network in which a network slice to which the service belongs is located.

Optionally, the service information may further include a first maximum quantity of users (Maximum Users for the Application), used to indicate a maximum quantity of users of the service that can be satisfied by the network in which the network slice to which the service belongs is located.

The first average service experience (Average Service MOS) is used to indicate average service experience of the service that can be satisfied by the current network.

First service experience range information (Service MOS Range) is used to indicate a service experience range in which the service can be satisfied by the current network.

The first service satisfaction (How many percentage UE's experience should be satisfied) is used to indicate user satisfaction of the service that can be satisfied by the current network.

In this embodiment of this application, the identifier information of the network slice may be an S-NSSAI, a network slice selection assistance information (Network Slice Selection Assistance Information, NSSAI), or an NSI ID.

The area information is used to indicate, to the slice management and control network element, a network area in which the network slice is supported.

The time information in the third information is used by the slice management and control network element to determine a time interval of the third information of the network slice. For example, the time information may be a time window, a timestamp, or a time interval.

For example, the time information in the third information is from March 1, 2018 to March 8, 2018. In this case, the slice management and control network element may determine that the third information of the network slice is collected from March 1, 2018 to March 8, 2018.

It should be understood that, in some optional implementations, after receiving the first request from the policy control network element, the slice management and control network element may perform step 108.

Specifically, when third information of a network slice includes: time information, area information, a first maximum quantity of users of the network slice, and service information of the network slice, the third information of the network slice is used by the slice management and control network element to determine service information of at least one service of the network slice in a specified area in a specified time interval and a first maximum quantity of registered users. Specifically, when third information of a network slice includes: time information, area information, and information about at least one service of the network slice, the third information of the network slice is used by the slice management and control network element to determine service information of at least one service of the network slice in a specified area in a specified time interval.

Optionally, before step 108, the method provided in this embodiment of this application further includes: The slice management and control network element sends a second request to the data analytics network element, so that the data analytics network element receives the second request from the slice management and control network element.

For example, the second request may be a data analytics information request (Nnwdaf_AnalyticsInfo_Request).

The second request is used to request the third information, and the second request includes the identifier of the second network area and at least one of the following information of the at least one network slice: the identifier information and the time information.

It should be understood that the slice management and control network element may send the second request to the data analytics network element through an interface between the slice management and control network element and the data analytics network element.

To be specific, the slice management and control network element sends the second request to the data analytics network element, to subscribe to the third information (which may also be referred to as statistics information, namely, estimated per slice statistics) of the at least one network slice in the second network area in the time interval indicated by the time information from the data analytics network element.

A process in which the data analytics network element obtains third information corresponding to each of the at least one network slice is not limited in this embodiment of this application. For details, refer to descriptions in a conventional technology.

Optionally, after receiving the third information, the slice management and control network element may further send, to the data analytics network element, a response used to indicate that the third information is received.

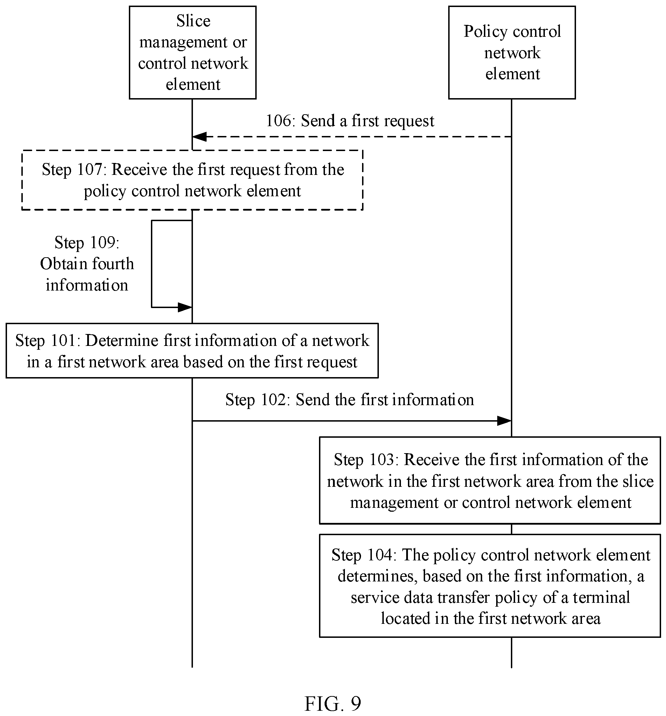

Optionally, in some embodiments, as shown in FIG. 9, the method provided in this embodiment of this application may further include the following step:
Step 109: The slice management and control network element obtains fourth information, where the fourth information includes at least one of the following information corresponding to the at least one network slice: a third quantity of users and a terminal identifier list.

It should be understood that the slice management and control network element may determine, based on the fourth information, a quantity of users of the at least one network slice, namely, a quantity of users camping in the at least one network slice, to help the slice management and control network element determine a quantity of users who can be further accommodated in the network slice or who are allowed to access the network slice, or help the slice management and control network element determine whether another user can be accommodated in the network slice or whether another user is allowed to access the network slice.

In a possible implementation, step 109 may be specifically implemented in the following manner: The slice management and control network element sends a third request to the data analytics network element or at least one access and mobility management function network element serving the first network area, so that the data analytics network element or the at least one access and mobility management function network element serving the first network area receives the third request from the slice management and control network element. The slice management and control network element receives the fourth information from the data analytics network element or the at least one access and mobility management function network element.

The third request is used to request the fourth information, and the third request includes at least one of the following information of the at least one network slice: identifier information, time information, and area information.

Optionally, after receiving the fourth information, the slice management and control network element may further send, to the data analytics network element or the at least one access and mobility management function network element, a response used to indicate that the fourth information is received.

One slice management and control network element can manage a plurality of access and mobility management function network elements, one access and mobility management function network element usually includes a plurality of TAs, and a network area indicated by one piece of area information can support a plurality access and mobility management function network elements. Therefore, the slice management and control network element may address, by using a TA/an S-NSSAI, at least one access and mobility management function network element that supports the S-NSSAI in the TA.

The manner in which the slice management and control network element obtains the third information is described in FIG. 8, and the manner in which the slice management and control network element obtains the fourth information is described in FIG. 9. In an optional manner, step 101 in this embodiment of this application may be specifically implemented in the following manner: The slice management and control network element determines the first information based on at least one of the following information: the second information, the third information, and the fourth information.

In an optional implementation, before step 101, the method provided in this embodiment of this application further includes: The slice management and control network element obtains requirement information, where the requirement information is used to indicate a quality requirement of the at least one network slice.

For example, the requirement information may include at least one of identifier information of each of the at least one network slice, a second maximum quantity of registered users, and service requirement information of at least one service.

For example, the service requirement information is used to indicate a service requirement that is required by a tenant and that can be satisfied by a network.

The second maximum quantity of registered users indicates a required maximum quantity of registered users of a network slice, for example, 10 million.

Optionally, the requirement information may further include at least one of area information and time information. In addition, the requirement information may further include a bandwidth requirement, a delay requirement, and the like.

For example, the application function network element sends the requirement information to the slice management and control network element via the policy control network element. In other words, the slice management and control network element obtains, via the policy control network element, the requirement information from the application function network element managed and controlled by the tenant. Alternatively, the requirement information may be configured by the operator on the slice management and control network element. Alternatively, the requirement information may be sent by the network management network element to the slice management and control network element. Optionally, the application function network element may be managed and controlled by a slice tenant.

For example, the service requirement information includes at least one of: an application ID, a second maximum quantity of users (Required Maximum Users for the Application, namely, a maximum quantity of users that is required by the tenant for the service and that can be satisfied by the network), second average service experience (Required Average Service MOS, namely, average service experience that is required by the tenant for the service and that can be satisfied by the network), second service experience range information (Requested Service MOS range, namely, a service experience range that is required by the tenant for the service and that can be satisfied by the network), and second service satisfaction (How many percentage UE's experience should be satisfied, namely, user satisfaction that is required by the tenant for the service and that can be satisfied by the network).

The second maximum quantity of users indicates a maximum quantity of users of a service, namely, a total quantity of users of a service, for example, 10000. The service identifier is used to identify a service in the slice. The second service experience range information is used to indicate a service experience requirement of the service.

For example, the service in the network slice may be a voice service, and a range of a second MOS is [0.0, 5.0]. For example, an experience requirement of the voice service can be satisfied only when the second MOS is greater than or equal to 3.0 and less than or equal to 5.0. In other words, MOS=3.0 is a minimum requirement for satisfying experience of the voice service. When the MOS is greater than or equal to 3.0, the MOS can be increased to 4.0, 4.5, 5.0, or the like in ascending order of experience. A higher MOS value indicates a stricter requirement on a QoS parameter corresponding to the voice service, a higher requirement on network quality, and a higher requirement on a network resource, which may also be understood as a higher requirement on a resource of the network slice.

The second service satisfaction is used to indicate a ratio that is required by the service tenant for the service and that is of a quantity of services satisfying the second service experience range information to the total quantity of services. For example, the proportion is a first threshold. To be specific, the ratio that is required by the tenant for the service and that is of the quantity of services satisfying the second service experience range information to the total quantity of services is greater than or equal to the first threshold. The first threshold is not limited in this embodiment of this application.

For example, the tenant usually raises a service satisfaction requirement to the operator. For example, for the voice service, the tenant requires that a ratio of a quantity of services whose MOSs are greater than or equal to 3.0 to the total quantity of services is greater than or equal to 95%.

Specifically, that the slice management and control network element determines the first information based on at least one of the second information, the third information, and the fourth information may be implemented in the following manner:
For example, it is assumed that one network slice has only one service, and the tenant requires that service experience (namely, a service MOS) is higher than 4.0, and requires that service satisfaction of users is higher than 95%. Quality and a quality requirement that are of the network slice have the following two cases:
In a first case, the slice management and control network element determines that the network can satisfy the quality requirement of the network slice by 120%. To be specific, the service MOS in the third information of the network slice is 4.8, and the service satisfaction of users is 98%. In this case, quality corresponding to the network slice is higher than quality required by the quality requirement of the network slice. This may be referred to as overfitting (Overfitting).

In a second case, the slice management and control network element determines that the network can satisfy the quality requirement of the network slice by 80%. To be specific, the service MOS in the third information of the network slice is 3.2, and the service satisfaction of users is 76%. In this case, quality corresponding to the network slice is lower than quality required by the quality requirement of the network slice. This may be referred to as underfitting (underfitting).

For example, the slice management and control network element obtains, from the third information, a quantity of users of a network slice in a network area in a corresponding time interval, where the quantity is required by a tenant or a service provider; and obtains, from the fourth information, a quantity of users camping in the network slice in the network area in the corresponding time interval. If the quantity of users of the network slice that is required by the tenant or the service provider is greater than the quantity of users camping in the network slice in the time interval, the slice management and control network element may consider that quality corresponding to the network slice is higher than the quality required by the quality requirement of the network slice. This may be referred to as overfitting. This means that more users may be allowed to access the network slice. That is, the load information of the network slice is not congested or idle. On the contrary, it may be determined that the quality corresponding to the network slice is lower than the quality required by the quality requirement of the network slice.

It should be noted that, the foregoing embodiment is only one of methods for determining the relationship between the quality of the network slice and the quality requirement of the network slice. For a specific more complex scenario, for example, when a plurality of services exist in a plurality of network slices, a more complex algorithm needs to be designed, and the more complex algorithm is implemented by an internal product of the data analytics network element. Then, in an actual operation process, use of a new network slice or a network slice for which no SLA is signed may affect running quality of an existing network slice. Therefore, when a relationship between quality of a network slice and a quality requirement of the network slice is determined, third information of the network slice is similarly processed, and optionally, third information of another network slice further needs to be referenced.

Specifically, step 101 may be specifically implemented in the following manner: The slice management and control network element determines, based on a preconfigured policy and the third information that are corresponding to each of the at least one network slice, the relationship between the quality of the network slice and the quality requirement of the network slice.

For example, the preconfigured policy may be a requirement on a maximum quantity of registered users of the network slice. When the relationship between the quality of the network slice and the quality requirement of the network slice is determined, a value relationship between a first maximum quantity of registered users of the network slice that can be satisfied by the current network and a second maximum quantity of registered users of the network slice is considered. The value relationship may be greater than, lower than, equal to, close to, or the like.

For example, the slice management and control network element determines, based on third information and a preconfigured policy that are corresponding to an NS 1, a relationship between quality corresponding to the NS 1 and a quality requirement of the NS 1. The slice management and control network element determines, based on third information and a preconfigured policy that are corresponding to an NS 2, a relationship between quality corresponding to the NS 2 and a quality requirement of the NS 2. The slice management and control network element determines, based on third information and a preconfigured policy that are corresponding to an NS 3, a relationship between quality corresponding to the NS 3 and a quality requirement of the NS 3.

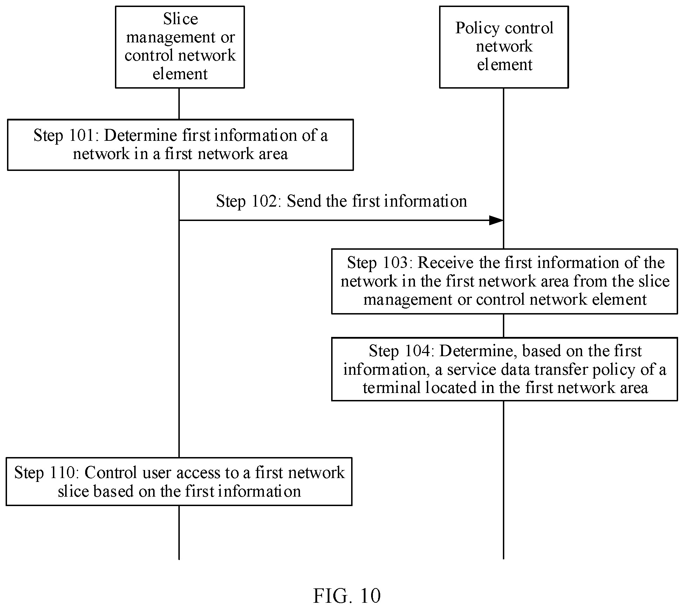

Optionally, in some embodiments, as shown in FIG. 10, the method provided in this embodiment of this application may further include the following step:
Step 110: The slice management and control network element controls user access to the first network slice based on at least one of the first information, the second information, the third information, and the fourth information.

It should be understood that, in this embodiment of this application, controlling user access to a network slice means controlling a quantity of users or terminals accessing the network slice or a quantity of services accessing the network slice.

It should be understood that the first network slice in step 110 and the at least one network slice in step 101 are network slices in a same network area. Alternatively, the first network slice in step 110 and the at least one network slice in step 101 are network slices in a same time interval in a same network area. The at least one network slice may include the first network slice, or may not include the first network slice.

For example, step 110 in this embodiment of this application may be specifically implemented by using any one of the following example 1 to example 3.

Example 1: The slice management and control network element determines that quality of the first network slice is higher than a quality requirement of the first network slice, and the slice management and control network element reduces users accessing the first network slice.

It should be understood that when the at least one network slice does not include the first network slice, a relationship between the quality of the first network slice and the quality requirement of the first network slice may be determined based on the quality of the at least one network slice and the quality requirement of the at least one network slice. That is, a time interval in which the background data can be transferred is determined based on the load information of the at least one network slice.

For example, that the slice management and control network element determines that quality of the first network slice is higher than a quality requirement of the first network slice includes: The slice management and control network element determines that quality of any network slice other than the first network slice in the at least one network slice is lower than a quality requirement of any network slice, and determines that the quality of the first network slice is higher than the quality requirement of the first network slice. For a specific process in which the slice management and control network element determines the relationship between the quality of the first network slice and the quality requirement of the first network slice, refer to the conventional technology.

For example, the at least one network slice includes an NS 1, an NS 2, and an NS 3. The first network slice is the NS1. If the slice management and control network element determines that quality of the NS2 is lower than a quality requirement of the NS2, the slice management and control network element determines that quality of the NS1 is higher than a quality requirement of the first network slice.

It should be understood that, when the at least one network slice includes the first network slice, that the slice management and control network element determines that quality of the first network slice is higher than a quality requirement of the first network slice includes: The slice management and control network element determines the quality of the first network slice based on the first information of the first network slice. When the quality of the first network slice is higher than the quality requirement of the first network slice, the slice management and control network element determines that the quality of the first network slice is higher than the quality requirement of the first network slice.

It should be understood that, when the at least one network slice does not include the first network slice, that the slice management and control network element determines that quality of the first network slice is higher than a quality requirement of the first network slice includes: The slice management and control network element determines the quality of the at least one network slice based on the first information of the at least one network slice. When quality of some or all of the at least one network slice is lower than quality requirements of the network slices, the slice management and control network element determines that the quality of the first network slice is higher than the quality requirement of the first network slice.

In an optional implementation, the method provided in this embodiment of this application further includes: The slice management and control network element sends the relationship between the quality of the at least one network slice and the quality requirement to an access device.

For example, in the example 1, the slice management and control network element sends, to the access device, information indicating that the quality of the first network slice is higher than the quality requirement of the first network slice, so that the access device can reduce resources allocated to the first network slice.

For example, in the example 1, the slice management and control network element sends, to the access device, information indicating that quality of a remaining network slice other than the first network slice in the at least one network slice is lower than or equal to a quality requirement of the remaining network slice, so that the access device may increase resources allocated to the remaining network slice.

Example 2: The slice management and control network element determines that quality of any network slice other than the first network slice in the at least one network slice is higher than a quality requirement of the network slice, and the slice management and control network element increases users accessing the first network slice.

In an optional implementation, the example 2 may be specifically implemented in the following manner: When the quality of any network slice other than the first network slice in the at least one network slice is higher than the quality requirement of the network slice, the slice management and control network element determines that a quantity of users currently accessing the first network slice is less than the second maximum quantity of registered users, and the slice management and control network element increases the quantity of users accessing the first network slice.

Optionally, when the quality of any network slice other than the first network slice in the at least one network slice is higher than the quality requirement of the network slice, and the slice management and control network element determines that the quantity of users currently accessing the first network slice is less than or equal to the second maximum quantity of registered users, the slice management and control network element sends the relationship between the quality of the at least one network slice and the quality requirement to the access device.

Optionally, the terminal in the first network area is served by the first network slice.

Optionally, the first network slice is used to transfer the background data.

The following describes in detail how to determine the service data transfer policy with reference to a specific example.

For example, a network slice 1, a network slice 2, and a background data transfer (Background Data Transfer, BDT) slice exist in the TA 1. As shown in a table 2, the policy control network element first provides a service data transfer requirement, namely, the TA 1, to the slice management and control network element. The service data transfer requirement may further include an ASP ID, a quantity of terminals (number of UEs), a first data volume of the terminal, and a time window.

The slice management and control network element first obtains statistics information (namely, running quality of the network slice 1 and network slice 2 in a network) of the network slice 1 and the network slice 2 in different time windows in the TA 1 and quality requirements that are of the network slice 1 and the network slice 2 and that are configured on the slice management and control network element, to determine slice SLA fulfilment information of the network slice 1 and the network slice 2, and then feed back the slice SLA fulfilment information to the policy control network element.

**Table 2**

| Identifier of a network slice | Quality requirement of the network slice | Statistics information of the slice | Slice SLA fulfilment information | Service data transfer policy | Slice management and control network element controls a quantity of users accessing the background data slice |
|---|---|---|---|---|---|
| | From an AF or OAM network element | The data analytics network element obtains the statistics information of the slice through data analysis, and sends the statistics information to the slice management control network element | The slice management and control network element obtains the slice SLA fulfilment information based on the quality requirement of the network slice and the statistics information of the slice, and sends the slice SLA fulfilment information to the policy control network element | The policy control network element determines the service data transfer policy | |
| Network slice 1 | URLLC 1 million APP 1 | URLLC 1 million APP 1 | 95%/90%=106% | TA 1 | N/A |
| | Average MOS: 3.5 | Average MOS: 4.5 | | From 00:00 to 01:00 on November 9, 2018 | |
| | Service satisfaction: 90% | Service satisfaction: 95% | | | |
| | TA 1 | TA 1 | | | |
| | From 00:00 to 01:00 on November 9, 2018 | From 00:00 to 01:00 on November 9, 2018 | | | |
| Network slice 2 | eMTC 2 million APP 2 | eMTC 2 million APP 2 | 98%/87%=113% | | N/A |
| | Average MOS: 3.0 | Average MOS: 4.0 | | | |
| | Service satisfaction: 87% | Service satisfaction: 98% | | | |
| | TA 1 | TA 1 | | | |
| | From 00:00 to 01:00 on November 9,2018 | From 00:00 to 01:00 on November 9, 2018 | | | |
| BDT slice | 100,000 | 30,000 | | | 50,000 |
| | APP 3 | APP 3 | | | APP 3 |
| | Data Volume per UE: 50 MB (500 GB) | Total volume of transferred data: 100 GB | | | Total volume of transferred data: 150 GB |
| | TA 1 | TA 1 | | | TA 1 |
| | Desired transfer time window: From 12:00 to 02:00 on November 9, 2018 | Transfer time: From 00:00 to 01:00 on November 9, 2018 | | | Transfer time: From 00:00 to 01:00 on November 9, 2018 |

It can be learned from the table 2 that, the policy control network element finds, based on the slice SLA fulfilment information of the network slice 1 and the network slice 2, that a slice SLA is overfitting in the time interval 00:00-01:00 in the TA 1. That is, the network has an idle resource that can be used to transfer background data in the time interval. The policy control network element uses 00:00-01:00 as a background data transfer policy, and sends the background data transfer policy to the AF network element.

In addition, the policy control network element determines that both a relationship between the quality of the network slice 1 and the quality requirement of the network slice 1 and a relationship between the quality of the network slice 2 and the quality requirement of the network slice 2 exceed 100%, and determines, by querying the AMF, that there are 30,000 users of the BDT slice in the current TA 1. In addition, the quality requirement of the network slice requires that a quantity of users of the BDT slice is 100,000. Therefore, the policy control network element determines that the BDT slice can be accessed by more users.

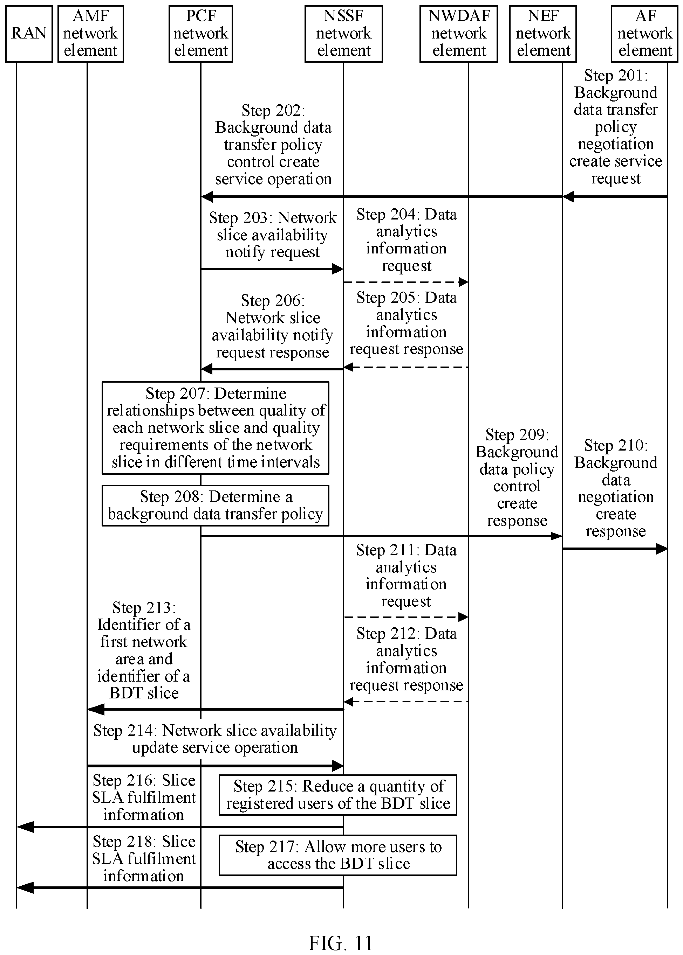

For example, the communication system shown in FIG. 2 is applied to the 5G network shown in FIG. 3, the policy control network element is a PCF network element, the slice management and control network element is an NSSF network element, and the data analytics network element is an NWDAF network element. The 5G network further includes an AMF network element, an AF network element, an NEF network element, and a RAN device. For example, service data is background data. FIG. 11 shows a transfer policy determining method and policy control method according to an embodiment of this application. The method includes the following steps.

Step 201: The AF network element sends a background data transfer policy negotiation create (Nnef BDTPNegotiation Create) service request to the NEF network element, so that the NEF receives the background data transfer policy negotiation create service request from the AF network element. The AF network element can request a background data transfer policy from a network side by using the background data transfer policy negotiation create service request.

The background data transfer policy negotiation create service request carries a service data transfer requirement. For content of the service data transfer requirement, refer to the table 1. Details are not described herein again.

Step 202: The NEF network element sends a background data transfer policy control create (Npcf BDTPolicyControl Create) service request to the PCF network element, so that the PCF network element receives the background data transfer policy control create service request from the NEF.

The background data transfer policy control create service request carries the service data transfer requirement from the AF network element.

Step 203: The PCF network element sends a network slice availability notify request to the NSSF network element, so that the NSSF network element receives the network slice availability notify request from the PCF network element.

The network slice availability notify request carries an identifier of a second network area.

For a manner of determining the second network area by the PCF network element in step 203, refer to descriptions in the foregoing embodiment. Details are not described herein again.

Optionally, the network slice availability notify request may further carry: a third time interval, a first quantity of users that is corresponding to a terminal, a first data volume corresponding to the terminal, an identifier of the terminal, and an identifier of an application function network element (ASP identifier, ASP ID) corresponding to a service providing server serving the terminal. In this case, the slice management and control network element may determine, based on information in the service data transfer requirement, a network quality requirement of a network slice used by a user to transfer a service.

Step 204: The NSSF network element sends a data analytics information request to the NWDAF network element, so that the NWDAF network element receives the data analytics information request.

The data analytics information request carries identifier information of at least one network slice. It should be understood that the at least one network slice is a network slice included in a network in the second network area.

Step 205: The NWDAF network element sends a data analytics information request response to the NSSF network element, so that the NSSF network element receives the data analytics information request response.

The data analytics information request response carries quality of each of at least one network slice in a first network area.

Step 206: The NSSF network element sends a network slice availability notify request response to the PCF network element, where the network slice availability notify request response carries the quality of each network slice.

Step 207: The PCF network element determines, based on quality of each of the at least one network slice in different time intervals in the first network area, relationships between the quality of the network slice and a quality requirement of the network slice in different time intervals.

Step 208: The PCF network element determines a background data transfer policy based on the relationships between the quality of each network slice and the quality requirement of the network slice in different time intervals.

Specifically, the PCF network element may determine, based on the relationships between the quality of each network slice and the quality requirement of the network slice in different time intervals, a time interval in which the quality of the network slice is higher than the quality requirement as the background data transfer policy.

Step 209: The PCF network element sends a background data policy control create response (Npcf BDTPolicyControl Create response) to the NEF network element.

The background data policy control create response carries the background data transfer policy.

Step 210: The NEF network element sends a background data negotiation create response (Nnef BDTPNegotiation Create response) to the AF network element.

The background data negotiation create response carries the background data transfer policy.

It should be understood that the at least one network slice in step 201 to step 210 does not include a background data slice (BDT slice).

Step 211: The NSSF network element sends a data analytics information request to the NWDAF network element, to obtain, from the NWDAF network element, statistics information of a BDT slice in different time intervals in the first network area.

The data analytics information request carries an identifier of the first network area and identifier information of the BDT slice.

Step 212: The NSSF network element receives a data analytics information request response from the NWDAF network element.

The data analytics information request response carries the satisfaction information (Statistics Information) of the BDT slice in the first network area.

The satisfaction information of the BDT slice includes the identifier information of the BDT slice, a network area, a volume of background data that has been transferred in the BDT slice (which may be at a terminal level), and a quantity of terminals that have transferred background data.

Step 213: The NSSF network element sends the identifier of the first network area and the identifier information of the BDT slice to at least one AMF network element.

Step 214: The NSSF network element receives a network slice availability update service operation (Nnssf NSSAIAvailabilityUpdate) from the at least one AMF network element.

The network slice availability update service operation carries a quantity of currently registered users of the background data transfer slice.

If the NSSF network element determines, by performing step 206, that the quality of the at least one network slice is lower than the quality requirement (that is, slice SLAfulfilment information is underfitting), the NSSF network element performs step 215, or performs step 215 and step 216.

If the NSSF network element determines, by performing step 206, that quality of any of the at least one network slice is higher than a quality requirement of the network slice (that is, the network slice is overfitting), the NSSF network element performs step 217 or step 218.

Step 215: If the NSSF network element determines that slice SLA fulfilment information of the BDT slice is overfitting, the NSSF reduces a quantity of registered users of the BDT slice.

Step 216: The NSSF network element sends the slice SLAfulfilment information of the at least one network slice and/or the slice SLA fulfilment information of the BDT slice to the RAN.

It should be understood that, after receiving the slice SLA fulfilment information of the at least one network slice and/or the slice SLA fulfilment information of the BDT slice, the RAN may determine resource scheduling. For example, more or less air interface resources are scheduled for the BDT slice.

For example, the NSSF network element sends a network slice availability notify to at least one AMF network element corresponding to the RAN, where the network slice availability notify carries the slice SLA fulfilment information of the at least one network slice in the first network area and/or the slice SLA fulfilment information of the BDT slice. Then, the at least one AMF network element sends the slice SLA fulfilment information of the at least one network slice and/or the slice SLA fulfilment information of the BDT slice to the RAN by using configuration information update acknowledgment information (CONFIGURATION UPDATE ACKNOWLEDGE).

Specifically, if the RAN determines that the slice SLA fulfilment information of the BDT slice is overfitting, more air interface resources are scheduled for the BDT slice.

Step 217: If the NSSF network element determines that a quantity of terminals in the service data transfer requirement is greater than the quantity of terminals that have transferred the background data in step 212, the NSSF network element allows more users to access the BDT slice.

It should be understood that, if any network slice is overfitting, and the first quantity of users that is corresponding to the terminal in step 203 is greater than the quantity of terminals that have transferred the background data in step 212, that is, network resources of the network slice are abundant, a user may be further allowed to access the BDT slice.

Step 218: If the NSSF network element determines that the quantity of terminals in the service data transfer requirement is equal to the quantity of terminals that have transferred the background data in step 212, the NSSF network element sends the slice SLA fulfilment information of the at least one network slice and/or the slice SLA fulfilment information of the BDT slice to the RAN.

It should be understood that, if the NSSF network element determines that the quantity of terminals in the background data transfer requirement is equal to the quantity of terminals that have transferred the background data in step 212, that is, although current network resources are abundant, all users whose quantity is required by a tenant have accessed the background data transfer slice. In this case, the NSSF network element considers that the slice SLA fulfilment information of the BDT slice is overfitting, and more air interface resources are allocated to the BDT slice.

Optionally, after receiving the slice SLA fulfilment information of the at least one network slice and/or the slice SLA fulfilment information of the BDT slice, if determining that the slice SLA fulfilment information of the BDT slice is overfitting, the RAN may determine to reduce air interface resources scheduled for the BDT slice.

Optionally, when determining the slice SLA fulfilment information of the BDT slice, the NSSF network element also needs to consider the statistics information of the BDT slice from the NWDAF network element. For example, only when the NSSF network element finds that the quantity of terminals in the service data transfer requirement in step 203 is equal to a sum of the quantity of terminals that have transferred the background data in step 212 and the quantity of currently registered users of the background data slice, the NSSF network element further notifies the RAN to reduce air interface resources allocated to the BDT slice.

By performing step 211 to step 218, the NSSF network element can control the quantity of users of the BDT slice, to avoid affecting running quality of at least one network slice.

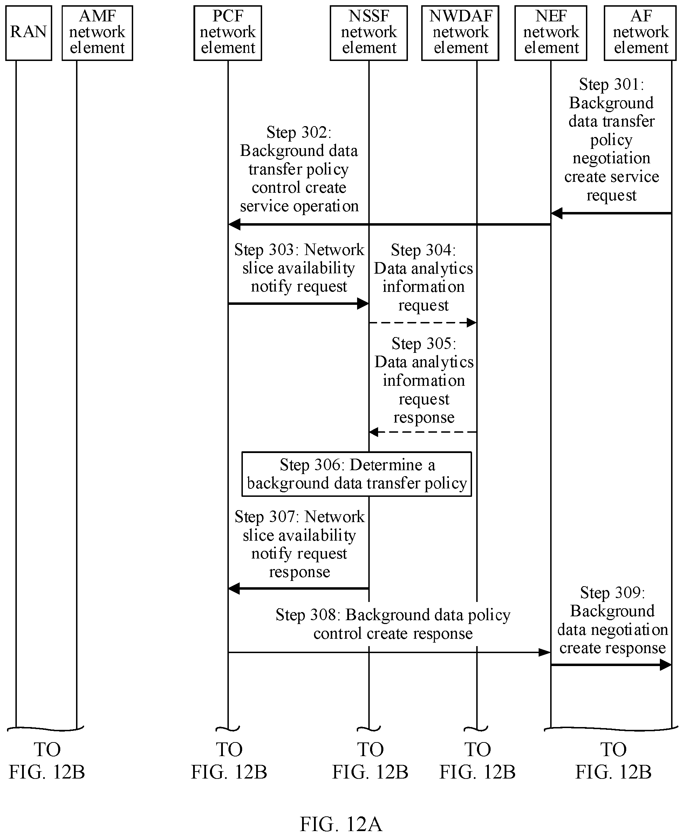

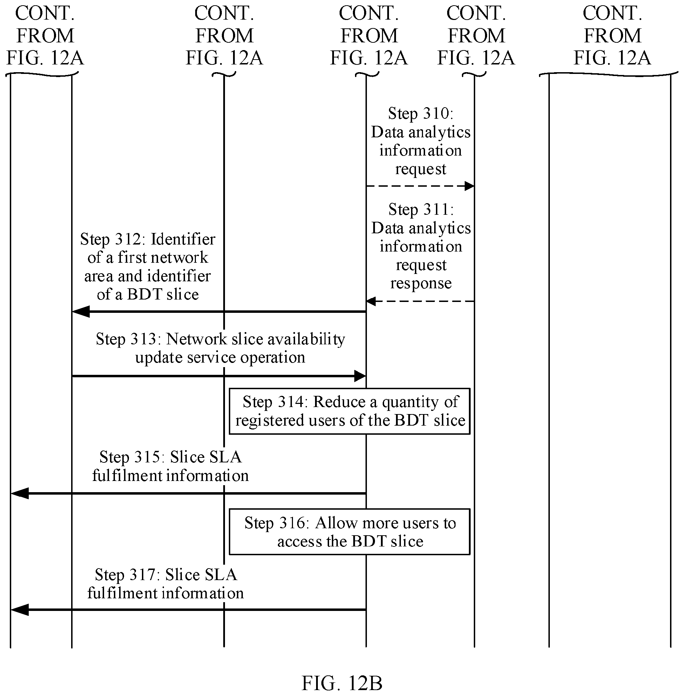

FIG. 12A and FIG. 12B show another transfer policy determining method and policy control method. The method includes the following steps.

Step 301 to step 305 are the same as step 201 to step 205 in the embodiment shown in FIG. 11. For related descriptions, refer to the embodiment shown in FIG. 11. Details are not described herein again.

A difference between step 306 and FIG. 11 lies in that the NSSF network element determines, based on slice SLA fulfilment information of at least one network slice, that a background data transfer policy includes a second time interval.

Step 307: The NSSF network element sends a network slice availability notify request response to the PCF network element. The network slice availability notify request response carries the background data transfer policy.

Step 308 to step 317 are the same as step 209 to step 218 in the embodiment shown in FIG. 11. For related descriptions, refer to the embodiment shown in FIG. 11. Details are not described herein again.

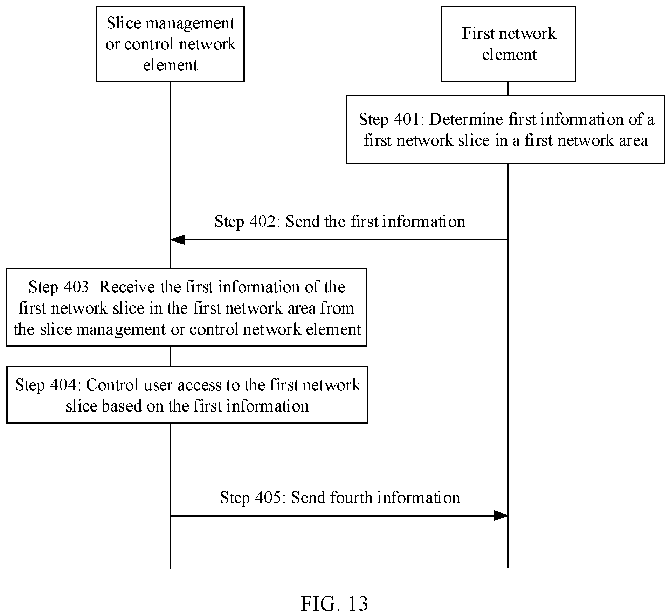

FIG. 13 shows a user access control method according to an embodiment of this application. In this method, requirement information of a network slice of a tenant or service provider, for example, a network area and a required quantity of users, may be sliced, to generate at least one network sub-area and a quantity of users that is required by a tenant or service provider in each network sub-area, and then the at least one network sub-area and quantity of users are further fed back to an NSSF network element, to help the NSSF network element control a quantity of users of a slice more precisely and at a finer granularity. The method includes the following steps.

Step 401: A first network element determines first information of a first network slice in a first network area.

It should be understood that the first network element determines that the first information of the first network slice in the first network area should be at an initial stage of slice deployment or an initial stage of creating the first network slice by a network management network element.

It should be understood that a process in which the first network slice determines the first network slice in the first network area is a process in which the first network element performs slicing based on a slice requirement of the first network slice, or a process in which the first network element obtains a slicing result of a slice requirement of the first network slice from another network element.

The first information includes at least one of a first quantity of users, a second quantity of users, and a third quantity of users. The first quantity of users is used to indicate a desired or required quantity of users of the first network slice in the first network area, the second quantity of users is used to indicate a quantity of users who have accessed the first network slice in the first network area, and the third quantity of users is used to indicate a quantity of users who are allowed to access the first network slice in the first network area. A slice management and control network element controls user access to the first network slice based on the first information. It should be understood that the third quantity of users is the quantity that is of users allowed to access the first network slice in the first network area and that is determined by the first network element or obtained from another network element. Further, it may be understood that the third quantity of users is a quantity of users who are initially allowed to access the first network slice in the first network area before a drive test, during initial creation, or before signing of an SLA.

It should be understood that the first quantity of users is a quantity of users who are required to be registered with the first network slice in the first network area. For example, the first quantity of users is a quantity of users of the first network slice in the first network area, where the quantity is desired or required by a service server or service provider corresponding to the first network slice, for example, 100,000. For example, the second quantity of users is 80,000. The third quantity of users is a maximum quantity of users who are allowed by the network to access the first network slice in the first network area, for example, 120,000.

Step 402: The first network element sends the first information of the first network slice in the first network area to the slice management and control network element.

In a possible implementation, the first information of the first network slice in the first network area may further include at least one of the following information: identifier information of the first network slice, an identifier of the first network area, first time information, and information about at least one service, where information about a service includes at least one of the following information: a service identifier, a first quantity of services, first average service experience, and first user satisfaction. It should be understood that the first time information is time information corresponding to the first network slice in the first network area. It should be understood that, the first quantity of services is used to indicate a quantity of users using the service in the first network slice in the first network area, and the first user satisfaction is a ratio of a quantity of users satisfying a service experience requirement to the quantity of users using the service in the first network slice in the first network area.

It should be noted that the time information in this embodiment of this application may be specifically corresponding to any one of a time interval, a time window, or a timestamp.

Step 403: The slice management and control network element receives the first information of the first network slice in the first network area from the first network element.

The slice management and control network element in this embodiment of this application may be any one of the NSSF network element, an AMF network element, or a PCF network element.

Step 404: The slice management and control network element controls user access to the first network slice based on the first information.

For example, the slice management and control network element may determine, based on the first information, the quantity of users that is required by the tenant or service provider of the first network slice in the first network area (the first quantity of users), a quantity of users camping in the first network slice (the second quantity of users), or a quantity of allowed users of the first network slice (an (initial) third quantity of users). Further, the slice management network element may gradually add users to the first network slice based on the third quantity of users, that is, increase the third quantity of users. When the slice management and control network element finds that quality of all or some of at least one network slice is higher than a quality requirement, and the first quantity of users is greater than the second quantity of users, it indicates that the first network slice does not affect running quality of another network slice in the network currently, and the slice management network element may allow more users to access the first network slice, that is, increase the third quantity of users. When the slice management and control network element finds that quality of all or some of the at least one network slice is higher than a quality requirement and the first quantity of users is equal to the second quantity of users, it indicates that the first network slice does not affect running quality of another network slice in the network currently, and the required quantity of users is implemented. When the slice management and control network element finds that quality of one of the at least one network slice is lower than a quality requirement of the network slice, it indicates that the first network slice affects running quality of another network slice in the network, and a quantity of users of the first network slice needs to be reduced.

For example, the first network element may be a policy control network element, a data analytics network element, a network management network element, or an access and mobility management function network element.

When the first network element is a policy control network element, step 401 may be specifically implemented in the following manner: The policy control network element receives the first information from the data analytics network element or the network management network element.

Optionally, that the policy control network element receives the first information from the data analytics network element or the network management network element includes: The policy control network element sends a first request to the data analytics network element or the network management network element, where the first request is used to request the first information, the first request includes second information, and the second information includes at least one of the following information: identifier information of the first network slice, a second network area, a terminal group identifier, a terminal identifier of at least one terminal, a fourth quantity of users, an identifier of an application function network element, or at least one piece of information about a service requirement. The first network slice serves the second network area, the second network area includes the first network area, the second network area is a network area in which at least one terminal corresponding to the application function network element is located, the terminal group identifier is a group identifier corresponding to the at least one terminal, and the third quantity of users is a quantity of users that is corresponding to the at least one terminal. The policy control network element receives a first response from the data analytics network element or the network management network element, where the first response includes the first information.

In a possible implementation, information about a service requirement includes at least one of the following information: a service identifier, a second quantity of services, second average service experience, second service experience range information, and second service satisfaction. It should be understood that the second quantity of services is a quantity of users using the service, where the quantity is desired or required by the service server or service provider corresponding to the first network slice, the second service experience is service experience that is of the service and that is desired or required by the service server or service provider corresponding to the first network slice, the second service experience range information is a service experience range that is of the service and that is desired or required by the service server or service provider corresponding to the first network slice, and the second service satisfaction is service satisfaction that is of the service and that is desired or required by the service server or service provider corresponding to the first network slice.

In a possible implementation, the method provided in this embodiment of this application further includes: The policy control network element obtains the second information from the application function network element or the network management network element.

Optionally, a tenant or service provider of the first network slice may configure the second information on the policy control network element via an operator. In this way, the policy control network element may locally obtain the second information.

Optionally, when the second information does not include the terminal identifier of the at least one terminal, the policy control network element may obtain the terminal identifier of the at least one terminal by querying a database network element based on the terminal group identifier or the identifier of the application function network element in the second information.

Optionally, the database network element may be a UDM or a UDR.

In a possible implementation, when the first network element is a data analytics network element, that the data analytics network element determines the first information includes: The data analytics network element obtains second information from a policy control function network element, an application function network element, or a network management network element. The data analytics network element determines the first information based on the second information.

In a possible implementation, the method provided in this embodiment of this application further includes: The data analytics network element sends third information of the at least one network slice in the first network area to the slice management and control network element.

Third information of any one of the at least one network slice includes at least one of the following information: identifier information of the network slice, third time information, an identifier of a third network area, a fifth quantity of users, and information about at least one service. The fifth quantity of users is used to indicate a quantity of users accessing any network slice, and information about a service is used to determine a status of the service.

For example, the information about the service includes at least one of the following information corresponding to the service: a service identifier, a third quantity of services, third average service experience, third service experience range information, and third service satisfaction, where the third quantity of services is used to indicate a quantity of users using the service in a network slice to which the service belongs.

In an optional implementation, the method provided in this embodiment of this application further includes: The slice management and control network element receives the third information of the at least one network slice in the first network area from the data analytics network element or the network management network element.

It should be understood that the third time information may be the first time information, may be sub-time information in the first time information, or may be other time information.

In this case, step 404 may be implemented in the following manner: The slice management and control network element controls user access to the first network slice based on the first information and the third information of the at least one network slice.

In a possible implementation, the at least one network slice includes the first network slice, so that the slice management and control network element can control user access to the first network slice based on the third information of the first network slice and the first information of the first network slice.

In an optional implementation, the method provided in this embodiment of this application further includes the following step:
Step 405: The slice management and control network element sends fourth information of the first network slice in the first network area to the first network element, where the fourth information includes a sixth quantity of users, and the sixth quantity of users is used to indicate a quantity of users allowed to access the first network slice in the first network area. It should be understood that the sixth quantity of users is a quantity that is of users allowed to access the first network slice in the first network area and that is determined by the slice management and control network element. Further, it may be understood that the sixth quantity of users is a quantity of users who are initially allowed to access the first network slice in the first network area after the drive test, after the creation, or after signing of the SLA. The first network element receives the fourth information of the first network slice in the first network area, and sends the fourth information of the first network slice in the first network area to an AF network element or an OAM network element.

In a possible implementation, the first network slice is a network slice for transferring background data.

The foregoing mainly describes the solutions in the embodiments of this application from a perspective of interaction between network elements. It may be understood that, to implement the foregoing functions, each network element, for example, a transfer policy determining apparatus (for example, a slice management and control network element) and a policy control apparatus (for example, a policy control network element), includes a corresponding hardware structure and/or software module for performing each function. A person skilled in the art should easily be aware that, in combination with the examples described in the embodiments disclosed in this specification, units and algorithm steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, function unit division may be performed on the transfer policy determining apparatus and the policy control apparatus based on the foregoing method examples. For example, each function unit may be obtained through division based on a corresponding function, or two or more functions may be integrated into one processing unit. The integrated unit may be implemented in a form of hardware, or may be implemented in a form of a software functional unit. It should be noted that, in the embodiments of this application, division into the units is an example, and is merely a logical function division. In an actual implementation, another division manner may be used.

An example in which each function module is obtained through division based on each corresponding function is used below for description.

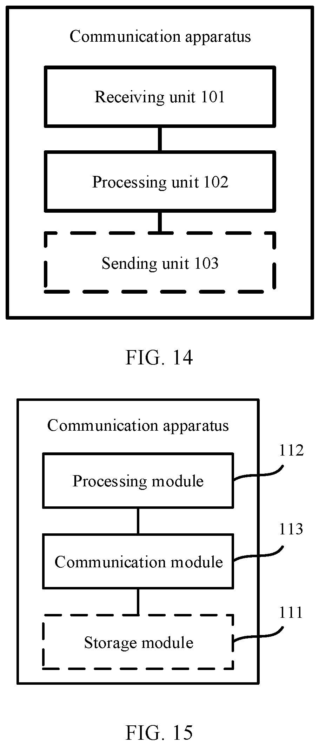

When an integrated unit is used, FIG. 14 shows a communication apparatus in the foregoing embodiments. The communication apparatus may include a receiving unit 101 and a processing unit 102.

In an example, when the communication apparatus is a transfer policy determining apparatus, the transfer policy determining apparatus may be a policy control network element, or a chip used in a policy control network element. In this case, the receiving unit 101 is configured to support the transfer policy determining apparatus in performing step 103 in the foregoing embodiments. The processing unit 102 is configured to support the transfer policy determining apparatus in performing step 104 in the foregoing embodiments. Optionally, the processing unit 102 is further configured to support the transfer policy determining apparatus in performing step 105 in the foregoing embodiments. Optionally, when the communication apparatus is the transfer policy determining apparatus, the transfer policy determining apparatus provided in this embodiment of this application further includes a sending unit 103, further configured to support the transfer policy determining apparatus in performing step 106 in the foregoing embodiments.

In another example, when the communication apparatus is a user access control apparatus, the user access control apparatus may be a slice management and control network element. In this case, the receiving unit 101 is configured to support the user access control apparatus in performing step 403 and step 405 in the foregoing embodiments. The processing unit 102 is configured to support the user access control apparatus in performing step 404 in the foregoing embodiments.

When an integrated unit is used, FIG. 15 is a schematic diagram of a possible logical structure of the communication apparatus in the foregoing embodiments. The communication apparatus includes a processing module 112 and a communication module 113. The processing module 112 is configured to control and manage actions of the communication apparatus. For example, the processing module 112 is configured to perform a step of information/data processing performed by the communication apparatus. The communication module 113 is configured to support the communication apparatus in performing a step of sending or receiving information/data.

Optionally, the communication apparatus may further include a storage module 111, configured to store program code and data that are of the communication apparatus.

For example, when the communication apparatus is a transfer policy determining apparatus, the transfer policy determining apparatus may be a policy control network element, or a chip used in a policy control network element. In this case, the communication module 113 is configured to support the transfer policy determining apparatus in performing step 103 in the foregoing embodiments. The processing module 112 is configured to support the transfer policy determining apparatus in performing step 104 in the foregoing embodiments.

Optionally, the processing module 112 is further configured to support the transfer policy determining apparatus in performing step 109 and step 105 in the foregoing embodiments.

Optionally, the communication module 113 is further configured to support the transfer policy determining apparatus in performing step 106 in the foregoing embodiments.

For example, when the communication apparatus is a user access control apparatus, the user access control apparatus may be a slice management and control network element. In this case, the communication module 113 is configured to support the user access control apparatus in performing step 403 and step 405 in the foregoing embodiments. The processing module 112 is configured to support the user access control apparatus in performing step 404 in the foregoing embodiments.

The processing module 112 may be a processor or a controller, for example, may be a central processing unit, a general purpose processor, a digital signal processor, an application-specific integrated circuit, a field programmable gate array or another programmable logic device, a transistor logic device, a hardware component, or any combination thereof. The processing module 112 may implement or execute various examples of logical blocks, modules, and circuits described with reference to content disclosed in the present invention. Alternatively, the processor may be a combination of processors implementing a computing function, for example, a combination of one or more microprocessors, or a combination of the digital signal processor and a microprocessor. The communication module 113 may be a transceiver, a transceiver circuit, a communication interface, or the like. The storage module 111 may be a memory.

When the processing module 112 is a processor 41 or a processor 45, the communication module 113 is a communication interface 43 or a transceiver, and the storage module 111 is a memory 42, the user access control apparatus in this application may be the communication device shown in FIG. 5.

The memory 42, the processor 41 or the processor 45, and the communication interface 43 are connected to each other by using the communication line 44. For example, when the communication device shown in FIG. 5 is a transfer policy determining apparatus, the communication interface 43 is configured to support the transfer policy determining apparatus in performing step 103 in the foregoing embodiments. The processor 41 or the processor 45 is configured to support the transfer policy determining apparatus in performing step 104 in the foregoing embodiments. Optionally, the processor 41 or the processor 45 is further configured to support the user access control apparatus in performing step 105 in the foregoing embodiments.

Optionally, the communication interface 43 is further configured to support the transfer policy determining apparatus in performing step 106 in the foregoing embodiments.

When the communication device shown in FIG. 5 is a user access control apparatus, the communication interface 43 is configured to support the user access control apparatus in performing step 403 and step 405 in the foregoing embodiments. The processor 41 or the processor 45 is configured to support the user access control apparatus in performing step 404 in the foregoing embodiments.

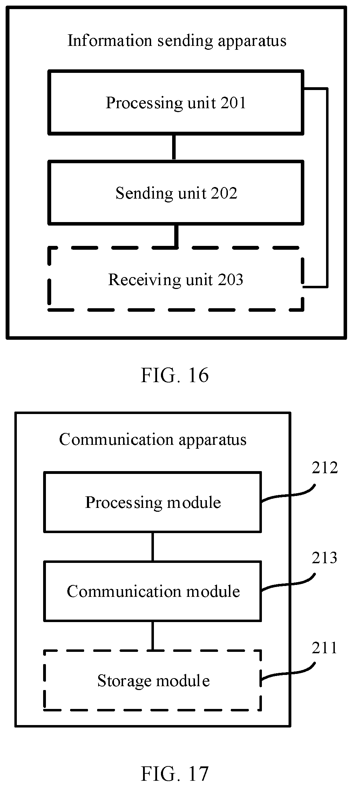

When an integrated unit is used, FIG. 16 is a possible schematic structural diagram of another communication apparatus in the foregoing embodiments. The communication apparatus includes a processing unit 201 and a sending unit 202.

Optionally, the communication apparatus further includes a receiving unit 203.

For example, when the communication apparatus is a policy control apparatus, the policy control apparatus may be a slice management and control network element, or may be a chip used in a slice management and control network element. The processing unit 201 is configured to support the policy control apparatus in performing step 101 in the foregoing embodiments. The sending unit 202 is configured to support the policy control apparatus in performing step 102 in the foregoing embodiments.

Optionally, the receiving unit 203 is configured to support the policy control apparatus in performing step 107, step 108, and step 109 in the foregoing embodiments.

Optionally, the processing unit 201 is configured to support the policy control apparatus in performing step 110 in the foregoing embodiments.

For example, when the communication apparatus is an information determining apparatus, the information determining apparatus may be a first network element or a chip used in a first network element. The processing unit 201 is configured to support the information determining apparatus in performing step 401 in the foregoing embodiments. The sending unit 202 is configured to support the information determining apparatus in performing step 402 in the foregoing embodiments.

It should be understood that when the apparatus shown in FIG. 16 is the information determining apparatus, the communication apparatus may not include the receiving unit 203.

When an integrated unit is used, FIG. 17 is a schematic diagram of a possible logical structure of another communication apparatus in the foregoing embodiments.

For example, the another communication apparatus may be a policy control apparatus, and the policy control apparatus may be a slice management and control network element, or may be a chip used in a slice management and control network element. The policy control apparatus includes a processing module 212 and a communication module 213. The processing module 212 is configured to control and manage actions of the policy control apparatus. For example, the processing module 212 is configured to perform a step of information/data processing performed by the policy control apparatus. The communication module 213 is configured to support the policy control apparatus in performing a step of sending or receiving information/data.

Optionally, the policy control apparatus may further include a storage module 211, configured to store program code and data that are of the policy control apparatus.

The communication module 213 is configured to support the policy control apparatus in performing step 102 in the foregoing embodiments. The processing module 212 is configured to support the policy control apparatus in performing step 101 in the foregoing embodiments.

Optionally, the processing module 212 is further configured to support the policy control apparatus in performing step 101 and step 110 in the foregoing embodiments.

The communication module 213 is further configured to support the policy control apparatus in performing step 107, step 108, and step 109 in the foregoing embodiments.

For example, when the communication apparatus is an information determining apparatus, the information determining apparatus may be a first network element or a chip used in a first network element. The processing module 212 is configured to support the information determining apparatus in performing step 401 in the foregoing embodiments. The communication module 213 is configured to support the information determining apparatus in performing step 402 in the foregoing embodiments.

The processing module 212 may be a processor or a controller, for example, may be a central processing unit, a general purpose processor, a digital signal processor, an application-specific integrated circuit, a field programmable gate array or another programmable logic device, a transistor logic device, a hardware component, or any combination thereof. The processing module 212 may implement or execute various examples of logical blocks, modules, and circuits described with reference to content disclosed in the present invention. Alternatively, the processor may be a combination of processors implementing a computing function, for example, a combination of one or more microprocessors, or a combination of the digital signal processor and a microprocessor. The communication module 213 may be a transceiver, a transceiver circuit, a communication interface, or the like. The storage module 211 may be a memory.

When the processing module 212 is a processor 41 or a processor 45, the communication module 213 is a communication interface 43 or a transceiver, and the storage module 211 is a memory 42, the policy control apparatus in this application may be the communication device shown in FIG. 5.

The memory 42, the processor 41 or the processor 45, and the communication interface 43 are connected to each other by using the communication line 44.

For example, when the communication device shown in FIG. 5 is a policy control apparatus, the communication interface 43 is configured to support the policy control apparatus in performing step 102 in the foregoing embodiments. The processor 41 or the processor 45 is configured to support the policy control apparatus in performing step 101 in the foregoing embodiments.

Optionally, the processor 41 or the processor 45 is further configured to support the policy control apparatus in performing step 110 in the foregoing embodiments.

The communication interface 43 is further configured to support the policy control apparatus in performing step 107, step 108, and step 109 in the foregoing embodiments.

For example, when the communication device shown in FIG. 5 is an information determining apparatus, the processor 41 or the processor 45 is configured to support the information determining apparatus in performing step 401 in the foregoing embodiments. The communication interface 43 is configured to support the information determining apparatus in performing step 402 in the foregoing embodiments.

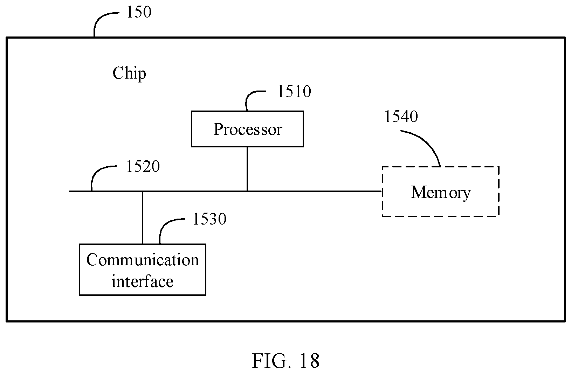

FIG. 18 is a schematic structural diagram of a chip 150 according to an embodiment of this application. The chip 150 includes one or more (including two) processors 1510 and a communication interface 1530.

Optionally, the chip 150 further includes a memory 1540. The memory 1540 may include a read-only memory and a random access memory, and provide operation instructions and data for the processor 1510. Apart of the memory 1540 may further include a non-volatile random access memory (non-volatile random access memory, NVRAM).

In some implementations, the memory 1540 stores the following elements: an execution module or a data structure, a subset thereof, or an extended set thereof.

In this embodiment of this application, a corresponding operation is performed by invoking the operation instructions (where the operation instructions may be stored in an operating system) stored in the memory 1540.

In a possible implementation, structures of chips used in the transfer policy determining apparatus, the policy control apparatus, the information determining apparatus, and the user access control apparatus are similar, and different chips may be used in different apparatuses to implement respective functions.

The processor 1510 controls a processing operation of any one of the transfer policy determining apparatus, the policy control apparatus, the information determining apparatus, and the user access control apparatus. The processor 1510 may also be referred to as a central processing unit (central processing unit, CPU).

The memory 1540 may include a read-only memory and a random access memory, and provide instructions and data for the processor 1510. A part of the memory 1540 may further include a non-volatile random access memory (non-volatile random access memory, NVRAM). For example, in application, the memory 1540, the communication interface 1530, and the memory 1540 are coupled together by using a bus system 1520. The bus system 1520 may include a power bus, a control bus, a status signal bus, and the like in addition to a data bus. However, for clarity of description, various types of buses in FIG. 18 are marked as the bus system 1520.

The methods disclosed in the foregoing embodiments of this application may be applied to the processor 1510, or may be implemented by the processor 1510. The processor 1510 may be an integrated circuit chip, and has a signal processing capability. In an implementation process, the steps in the foregoing methods may be implemented by using a hardware integrated logical circuit in the processor 1510, or by using instructions in a form of software. The processor 1510 may be a general-purpose processor, a digital signal processor (digital signal processing, DSP), an application-specific integrated circuit (application specific integrated circuit, ASIC), a field programmable gate array (field-programmable gate array, FPGA) or another programmable logic device, a discrete gate or a transistor logic device, or a discrete hardware component. The processor may implement or perform the methods, the steps, and logical block diagrams that are disclosed in the embodiments of this application. The general-purpose processor may be a microprocessor, or the processor may be any conventional processor or the like. The steps of the methods disclosed with reference to the embodiments of this application may be directly performed by a hardware decoding processor, or may be performed and accomplished by using a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory 1540, and the processor 1510 reads information in the memory 1540 and completes the steps in the foregoing methods in combination with hardware of the processor 1510.

In a possible implementation, the communication interface 1530 is configured to perform receiving and sending steps of the slice management and control network element, the policy control network element, or the first network element in the embodiments shown in FIG. 6 to FIG. 13. The processor 1510 is configured to perform processing steps of the slice management and control network element, the policy control network element, or the first network element in the embodiments shown in FIG. 6 to FIG. 13.

The foregoing sending unit and receiving unit may be each an interface circuit or a communication interface of the apparatus, and is configured to receive a signal from another apparatus. For example, when the apparatus is implemented as a chip, the sending unit and receiving unit are each an interface circuit or a communication interface that is of the chip and that is configured to send a signal or receive a signal from another chip or apparatus.

In the foregoing embodiments, the instructions that are stored in the memory and that are to be performed by the processor may be implemented in a form of a computer program product. The computer program product may be written into the memory in advance, or may be downloaded in a form of software and installed in the memory.

The computer program product includes one or more computer instructions. When the computer program instructions are loaded and executed on a computer, the procedures or functions according to the embodiments of this application are completely or partially generated. The computer may be a general-purpose computer, a dedicated computer, a computer network, or another programmable apparatus. The computer instructions may be stored in a computer-readable storage medium or may be transferred from a computer-readable storage medium to another computer-readable storage medium. For example, the computer instructions may be transferred from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive solid state disk, SSD), or the like.

According to an aspect, a computer-readable storage medium is provided. The computer-readable storage medium stores instructions. When the instructions are run, a policy control network element or a chip used in a policy control network element is enabled to perform step 103, step 104, step 105, and step 106 in the embodiments.

According to another aspect, a computer-readable storage medium is provided. The computer-readable storage medium stores instructions. When the instructions are run, a slice management and control network element or a chip used in a slice management and control network element is enabled to perform step 101, step 102, step 107, step 108, step 109, and step 110 in the embodiments.

According to still another aspect, a computer-readable storage medium is provided. The computer-readable storage medium stores instructions. When the instructions are run, a slice management and control network element or a chip used in a slice management and control network element is enabled to perform step 403 and step 404 in the embodiments.

According to yet another aspect, a computer-readable storage medium is provided. The computer-readable storage medium stores instructions. When the instructions are run, a first network element or a chip used in a first network element is enabled to perform step 401 and step 402 in the embodiments.

The foregoing readable storage medium may include any medium that can store program code, such as a USB flash drive, a removable hard disk, a read-only memory, a random access memory, a magnetic disk, or an optical disc.

According to an aspect, a computer program product including instructions is provided. The computer program product stores the instructions. When the instructions are run, a policy control network element or a chip used in a policy control network element is enabled to perform step 103, step 104, step 105, and step 106 in the embodiments.

According to another aspect, a computer program product including instructions is provided. The computer program product stores the instructions. When the instructions are run, a slice management and control network element or a chip used in a slice management and control network element is enabled to perform step 101, step 102, step 107, step 108, step 109, and step 110 in the embodiments.

According to still another aspect, a computer program product including instructions is provided. The computer program product stores the instructions. When the instructions are run, a slice management and control network element or a chip used in a slice management and control network element is enabled to perform step 403 and step 404 in the embodiments.

According to yet another aspect, a computer program product including instructions is provided. The computer program product stores the instructions. When the instructions are run, a first network element or a chip used in a first network element is enabled to perform step 401 and step 402 in the embodiments.

According to an aspect, a chip is provided. The chip is used in a policy control network element. The chip includes at least one processor and a communication interface. The communication interface is coupled to the at least one processor. The processor is configured to run instructions, to perform step 103, step 104, step 105, and step 106 in the embodiments.

According to another aspect, a chip is provided. The chip is used in a slice management and control network element. The chip includes at least one processor and a communication interface. The communication interface is coupled to the at least one processor. The processor is configured to run instructions, to perform step 101, step 102, step 107, step 108, step 109, and step 110 in the embodiments.

According to still another aspect, a chip is provided. The chip is used in a slice management and control network element. The chip includes at least one processor and a communication interface. The communication interface is coupled to the at least one processor. The processor is configured to run instructions, to perform step 403 and step 404 in the embodiments.

According to yet another aspect, a chip is provided. The chip is used in a first network element. The chip includes at least one processor and a communication interface. The communication interface is coupled to the at least one processor. The processor is configured to run instructions, to perform step 401 and step 402 in the embodiments.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, the procedures or functions according to the embodiments of this application are completely or partially generated. The computer may be a general-purpose computer, a dedicated computer, a computer network, or another programmable apparatus. The computer instructions may be stored in a computer-readable storage medium or may be transferred from a computer-readable storage medium to another computer-readable storage medium. For example, the computer instructions may be transferred from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD for short)), or the like.

Although this application is described with reference to the embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a great effect.

Although this application is described with reference to specific features and the embodiments thereof, it is clear that various modifications and combinations may be made to them without departing from the scope of this application. Correspondingly, the specification and accompanying drawings are merely descriptions of examples of this application defined by the appended claims, and are considered as any of or all modifications, variations, combinations, or equivalents that cover the scope of this application. It is clear that a person skilled in the art can make various modifications and variations to this application without departing from the scope of this application. This application is intended to cover these modifications and variations of this application provided that they fall within the scope of the claims of this application and their equivalent technologies.

## Claims

1. A transfer policy determining method, comprising:
receiving, by a policy control network element, first information of a network in a first network area from a slice management and control network element, wherein the first information comprises load information of the network in a first time interval and/or load information of at least one network slice in the first time interval, and the network comprises the at least one network slice; and
determining, by the policy control network element based on the first information, a service data transfer policy of a terminal located in the first network area.

2. The method according to claim 1, wherein the service data transfer policy comprises a second time interval, and the second time interval is a time interval that is in the first time interval and in which the load information of the network satisfies a preset network load requirement.

3. The method according to claim 1 or 2, wherein when the first information comprises the load information of the at least one network slice in the first time interval, the method further comprises:
determining, by the policy control network element, the load information of the network in the first time interval based on the load information of the at least one network slice in the first time interval.

4. The method according to any one of claims 1 to 3, wherein the method further comprises:
sending, by the policy control network element, a first request to the slice management and control network element, wherein the first request requests the first information, the first request comprises second information, the second information comprises an identifier of a second network area, and the second network area comprises the first network area.

5. The method according to claim 4, wherein the second information further comprises at least one of the following information:
a third time interval, a quantity of first users that is corresponding to the terminal, a first data volume corresponding to the terminal, an identifier of the terminal, and an identifier of an application function network element corresponding to a service providing server serving the terminal, wherein the third time interval indicates a service data transfer time that is of the terminal and that is desired by the service providing server, and the first quantity of users indicates a quantity of terminals for which the service providing server expects to transfer service data.

6. The method according to any one of claims 1 to 5, wherein the terminal is served by a first network slice.

7. The method according to claim 6, wherein the at least one network slice comprises the first network slice.

8. The method according to claim 6 or 7, wherein the first network slice is for transferring background data.

9. A policy control method, comprising:
determining, by a slice management and control network element, first information of a network in a first network area, wherein the first information comprises at least one of load information of the network in a first time interval and load information of at least one network slice in the first time interval, and the network comprises the at least one network slice; and
sending, by the slice management and control network element, the first information to a policy control network element.

10. The method according to claim 9, wherein the method further comprises:
obtaining, by the slice management and control network element, third information from a data analytics network element, wherein the third information comprises at least one of the following information corresponding to the at least one network slice:
identifier information, time information, area information, a second quantity of users, a second data volume, and service information, wherein the service information is for determining a status of a service in the network slice.

11. The method according to claim 9 or 10, wherein the method further comprises:
obtaining, by the slice management and control network element, fourth information, wherein the fourth information comprises at least one of the following information corresponding to the at least one network slice: a third quantity of users and a terminal identifier list.

12. The method according to any one of claims 9 to 11, wherein the determining, by a slice management and control network element, first information of a network in a first network area comprises:
determining, by the slice management and control network element, the first information based on at least one of second information, the third information, and the fourth information, wherein the second information comprises a second network area, a third time interval, a first quantity of users that is corresponding to a terminal, a first data volume corresponding to the terminal, an identifier of the terminal, and an identifier of an application function network element corresponding to a service providing server serving the terminal, wherein the third time interval indicates a service data transfer time that is of the terminal and that is desired by the service providing server, the first quantity of users indicates a quantity of terminals for which the service providing server expects to transfer service data, and the second network area comprises the first network area.

13. The method according to any one of claims 9 to 12, wherein the method further comprises:
controlling, by the slice management and control network element, user access to the first network slice based on at least one of the first information, the second information, the third information, and the fourth information.

14. A transfer policy determining apparatus, comprising:
a receiving unit, configured to receive first information of a network in a first network area from a slice management and control network element, wherein the first information comprises load information of the network in a first time interval and/or load information of at least one network slice in the first time interval, and the network comprises the at least one network slice; and
a processing unit, configured to determine, based on the first information, a service data transfer policy of a terminal located in the first network area.

15. The apparatus according to claim 14, wherein the service data transfer policy comprises a second time interval, and the second time interval is a time interval that is in the first time interval and in which the load information of the network satisfies a preset network load requirement.

16. The apparatus according to claim 14 or 15, wherein when the first information comprises the load information of the at least one network slice in the first time interval, the processing unit is further configured to determine the load information of the network in the first time interval based on the load information of the at least one network slice in the first time interval.

17. The apparatus according to any one of claims 14 to 16, wherein the apparatus further comprises:
a sending unit, configured to send a first request to the slice management and control network element, wherein the first request requests the first information, the first request comprises second information, the second information comprises an identifier of a second network area, and the second network area comprises the first network area.

18. The apparatus according to claim 17, wherein the second information further comprises at least one of the following information:
a third time interval, a quantity of first users that is corresponding to the terminal, a first data volume corresponding to the terminal, an identifier of the terminal, and an identifier of an application function network element corresponding to a service providing server serving the terminal, wherein the third time interval indicates a service data transfer time that is of the terminal and that is desired by the service providing server, and the first quantity of users indicates a quantity of terminals for which the service providing server expects to transfer service data.

19. The apparatus according to any one of claims 14 to 18, wherein the terminal is served by a first network slice.

20. The apparatus according to claim 19, wherein the at least one network slice comprises the first network slice.

21. The apparatus according to claim 19 or 20, wherein the first network slice is for transferring background data.

22. A policy control apparatus, comprising:
a processing unit, configured to determine first information of a network in a first network area, wherein the first information comprises at least one of load information of the network in a first time interval and load information of at least one network slice in the first time interval, and the network comprises the at least one network slice; and
a sending unit, configured to send the first information to a policy control network element.

23. The apparatus according to claim 22, wherein the apparatus further comprises:
a receiving unit, configured to obtain third information from a data analytics network element, wherein the third information comprises at least one of the following information corresponding to the at least one network slice:
identifier information, time information, area information, a second quantity of users, a second data volume, and service information, wherein the service information is for determining a status of a service in the network slice.

24. The apparatus according to claim 22 or 23, wherein the receiving unit is further configured to obtain fourth information, and the fourth information comprises at least one of the following information corresponding to the at least one network slice: a third quantity of users and a terminal identifier list.

25. The apparatus according to any one of claims 22 to 24, wherein the processing unit is specifically configured to determine the first information based on at least one of second information, the third information, and the fourth information, wherein the second information comprises a second network area, a third time interval, a first quantity of users that is corresponding to a terminal, a first data volume corresponding to the terminal, an identifier of the terminal, and an identifier of an application function network element corresponding to a service providing server serving the terminal, wherein the third time interval indicates a service data transfer time that is of the terminal and that is desired by the service providing server, the first quantity of users indicates a quantity of terminals for which the service providing server expects to transfer service data, and the second network area comprises the first network area.

26. The apparatus according to any one of claims 22 to 25, wherein the processing unit is further configured to control user access to the first network slice based on at least one of the first information, the second information, the third information, and the fourth information.

27. A computer-readable storage medium, storing computer programs or instructions, wherein when the computer programs or the instructions are run on a computer, the computer is enabled to perform the method according to any one of claims 1 to 8, or the method according to any one of claims 9 to 13.

28. A chip, comprising a processor and a communication interface, wherein the communication interface is coupled to the processor; the processor is configured to run computer programs or instructions, to implement the method according to any one of claims 1 to 8 or the method according to any one of claims 9 to 13; and the communication interface is configured to communicate with another module other than the chip.

29. A transfer policy determining apparatus, comprising a processor and a communication interface, wherein the communication interface is configured to perform a message/receiving operation in a policy control network element in the method according to any one of claims 1 to 8; and
the processor runs instructions in a memory, to perform a processing or control operation in the policy control network element in the method according to any one of claims 1 to 8.

30. A policy control apparatus, comprising a processor and a communication interface, wherein the communication interface is configured to perform a message sending/receiving operation in a slice management and control network element in the method according to any one of claims 9 to 13; and the processor runs instructions in a memory, to perform a processing or control operation in the slice management and control network element in the method according to any one of claims 9 to 13.

31. A communication system, comprising the transfer policy determining apparatus according to any one of claims 14 to 21, and the policy control apparatus according to any one of claims 22 to 26.
